(19) Europäisches Patentamt
European Patent Office
Office européen des brevets

(11) EP 4 177 068 A1

(12) **EUROPEAN PATENT APPLICATION**
published in accordance with Art. 153(4) EPC

(43) Date of publication:
**10.05.2023 Bulletin 2023/19**

(21) Application number: **21849152.0**

(22) Date of filing: **26.07.2021**

(51) International Patent Classification (IPC):
***B60C 1/00*** *(2006.01)* ***B60C 3/04*** *(2006.01)*
***B60C 11/00*** *(2006.01)* ***B60C 11/13*** *(2006.01)*

(52) Cooperative Patent Classification (CPC):
**B60C 1/00; B60C 3/04; B60C 11/00; B60C 11/13;**
Y02T 10/86

(86) International application number:
**PCT/JP2021/027579**

(87) International publication number:
**WO 2022/025005 (03.02.2022 Gazette 2022/05)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **28.07.2020 JP 2020127582**

(71) Applicant: **Sumitomo Rubber Industries, Ltd.**
**Kobe-shi, Hyogo 651-0072 (JP)**

(72) Inventors:
- **HAMAMURA, Kenji**
  **Kobe-shi, Hyogo 651-0072 (JP)**
- **KAWAI, Hiroki**
  **Kobe-shi, Hyogo 651-0072 (JP)**
- **TOYA, Subaru**
  **Kobe-shi, Hyogo 651-0072 (JP)**

(74) Representative: **Manitz Finsterwald**
**Patent- und Rechtsanwaltspartnerschaft mbB**
**Martin-Greif-Strasse 1**
**80336 München (DE)**

(54) **PNEUMATIC TIRE**

(57) A pneumatic tire is provided which has sufficiently reduced rolling resistance during high-speed running and which has sufficiently improved durability. In this pneumatic tire, which has a tread, at least one rubber layer forming the tread includes a rubber component containing styrene butadiene rubber and isoprene rubber, and is formed from a rubber composition with a loss tangent (30°C tanδ) less than or equal to 0.14, measured under the conditions of 30°C, frequency 10 Hz, initial strain 5%, and dynamic strain rate 1%; defining Wt (mm) as the cross-section width, Dt (mm) as the outer diameter and virtual volume V (mm3) as the volume of the space occupied by the tire when said tire is installed on the standardized rim and has an internal pressure of 250 kPa, the pneumatic tire satisfies (Formula 1) and (Formula 2).

$$1600 \leqq (Dt^2 \times \pi/4) / Wt \leqq 2827.4 \qquad \text{(Formula 1)}$$

$$[(V + 1.5 \times 10^7)/Wt] \leqq 2.88 \times 10^5 \qquad \text{(Formula 2)}$$

EP 4 177 068 A1

## Description

[TECHNICAL FIELD]

The present disclosure relates to a pneumatic tire.

[BACKGROUND ART]

In recent years, from the viewpoint of increasing interest in environmental issues and economic efficiency, there has been a growing demand for fuel efficiency in automobiles, and there is a strong demand for improved fuel efficiency also in pneumatic tires (hereinafter, simply referred to as "tires") installed in automobiles.

The fuel efficiency of a tire can be evaluated by rolling resistance, and it is known that the smaller the rolling resistance, the better the fuel efficiency of the tire.

Therefore, conventionally, it has been proposed to reduce the rolling resistance by devising the formulation of the rubber composition constituting the tread portion of the tire (for example, Patent Documents 1 to 4).

[PRIOR ART DOCUMENTS]

[PATENT DOCUMENT]

[Patent Document 1] JP2018-178034A
[Patent Document 2] JP2019-089911A
[Patent Document 3] WO2018 / 186367A
[Patent Document 4] JP2019-206643A

[SUMMARY OF INVENTION]

[PROBLEM TO BE SOLVED BY THE INVENTION]

However, it cannot be said that the tire manufactured by the above-mentioned conventional technology is sufficiently reduced in rolling resistance during high-speed running, and further reduction is desired. And it cannot be said that these tires have sufficient durability.

Therefore, an object of the present disclosure is to provide a pneumatic tire in which the rolling resistance during high-speed running is sufficiently reduced and its durability is sufficiently improved.

[MEANS FOR SOLVING THE PROBLEM]

The present discloser has diligently studied the solution to the above-mentioned problem, found that the above-mentioned problem can be solved by the disclosure described below, and has completed the present disclosure.

The present disclosure is;

a pneumatic tire having a tread portion, wherein
at least one of the rubber layers forming the tread portion contains a rubber component containing styrene-butadiene rubber and isoprene-based rubber, and is formed of a rubber composition having a loss tangent (30°Ctan $\delta$) of 0.14 or less measured under the conditions of 30°C, frequency 10 Hz, initial strain 5%, and dynamic strain rate 1%; and , when the cross-sectional width of the tire is Wt (mm), the outer diameter is Dt (mm), and the volume of the space occupied by the tire is the virtual volume V ($mm^3$), when the tire is installed on a standardized rim and the internal pressure is 250 kPa, the tire satisfies following (formula 1) and (formula 2):

$$1600 \leqq (Dt^2 \times \pi/4) / Wt \leqq 2827.4 \cdots \text{(formula 1)}$$

$$[(V + 1.5 \times 10^7) / Wt] \leqq 2.88 \times 10^5 \cdots \text{(formula 2)}$$

[THE EFFECT OF THE INVENTION]

According to the present disclosure, it is possible to provide a pneumatic tire in which the rolling resistance during high-speed running is sufficiently reduced and its durability is sufficiently improved.

[EMBODIMENTS FOR CARRYING OUT THE INVENTION]

[1] Features of the tire of the present disclosure

First, the features of the tire according to the present disclosure will be described.

1. Overview

The tire according to the present disclosure is characterized in that at least one of the rubber layers forming the tread portion contains a rubber component containing styrene-butadiene rubber and isoprene-based rubber, and is formed of a rubber composition having a loss tangent (30°Ctan $\delta$) of 0.14 or less measured under the conditions of 30°C, frequency 10 Hz, initial strain 5%, and dynamic strain rate 1%.

The tire according to the present disclosure is characterized also in that, when the cross-sectional width of the tire is Wt (mm), the outer diameter is Dt (mm), and the volume of the space occupied by the tire is the virtual volume V ($mm^3$), when the tire is installed on a standardized rim and the internal pressure is 250 kPa, the tire satisfies following (formula 1) and (formula 2):

$$1600 \leqq (Dt^2 \times \pi/4) / Wt \leqq 2827.4 \cdot\cdot\cdot\cdot (\text{formula 1})$$

$$[(V + 1.5 \times 10^7) / Wt] \leqq 2.88 \times 10^5 \cdot\cdot\cdot (\text{formula 2})$$

The physical properties of the rubber composition forming the tread portion and the shape of the tire have the characteristics described above, and thereby a tire with sufficiently reduced rolling resistance during high-speed running and sufficiently improved durability can be provided.

In the above description, the "standardized rim" is a rim defined for each tire in the standard system including the standard on which the tire is based. For example, in the case of JATMA (Japan Automobile Tire Association), it is the standard rim in applicable sizes described in the "JATMA YEAR BOOK", in the case of "ETRTO (The European Tire and Rim Technical Organization)", it is "Measuring Rim" described in "STANDARDS MANUAL", and in the case of TRA (The Tire and Rim Association, Inc.), it is "Design Rim" described in "YEAR BOOK ". In the case of tires that are not specified in the standard, it refers a rim that can be assembled and can maintain internal pressure, that is, the rim that does not cause air leakage from between the rim and the tire, and has the smallest rim diameter, and then the narrowest rim width.

Further, the outer diameter Dt of the tire is the outer diameter of the tire installed on a standardized rim, having an internal pressure of 250 kPa and in a no-load state. The cross-sectional width Wt (mm) of the tire is the width of tire installed on a standardized rim, having an internal pressure of 250 kPa and in a no-load state, and is the distance excluding patterns, letters, and the like on the tire side from the linear distance between the sidewalls (total width of the tire) including all the patterns, letters and the like on the tire side.

Further, the virtual volume V ($mm^3$) of the tire is, specifically, can be calculated by the following formula:

$$V = [(Dt/2)^2 - \{(Dt/2) - Ht\}^2] \times \pi \times Wt$$

based on the outer diameter of tire Dt (mm), the tire cross-sectional height (distance from the bottom of the bead to the outermost surface of the tread; 1/2 of the difference between the tire outer diameter and the nominal rim diameter) Ht (mm), and the cross-sectional width of tire Wt (mm), in the state the tire is installed on a standardized rim, the internal pressure is 250 kPa and no load is applied.

2. Mechanism of effect manifestation in tire according to the present disclosure

The mechanism of effect manifestation in the tire according to the present disclosure, that is, the mechanism of the rolling resistance being sufficiently reduced at high-speed running, and the durability being sufficiently improved,

is presumed as follows.

(1) Tire shape

As described above, in the present disclosure, the cross-sectional width Wt (mm) and the outer diameter Dt (mm) of the tire are tried to satisfy

$$1600 \leqq (Dt^2 \times \pi/4) / Wt \leqq 2827.4 \quad \text{(formula 1)}.$$

By increasing [$(Dt/2)^2 \times \pi$) = ($Dt^2 \times \pi/4$)], the area when the tire is viewed from the lateral direction, with respect to the cross-sectional width Wt of the tire, and satisfying the numerical range specified in formula 1, the repetition of deformation per unit time is reduced, as a result, the friction between the tread portion and the road surface is reduced, and, it is considered that low rolling resistance can be achieved. In (formula 1), ($Dt^2 \times \pi/4$) / Wt is more preferably 1700 or more, further preferably 1735 or more, further preferably 1737 or more, further preferably 1749 or more, further preferably 1751 or more, further preferably 1753 or more, further preferably 1758 or more, further preferably 1760 or more, further preferably 1787 or more, further preferably 1801 or more, further preferably 1818 or more, further preferably 1853 or more, further preferably 1856 or more, further preferably 1864 or more, further preferably 1865 or more, further preferably 1963.5 or more, further preferably 2008 or more, further preferably 2010 or more, further preferably 2015 or more, further preferably 2016 or more, further preferably 2018 or more, and further preferably 2031 or more.

However, in such a narrow tire the centrifugal force increases during high-speed running, and there is a risk that the tire radius will grow significantly during rolling, or that the tread portion will become round and the amount of deformation will increase.

In addition, as the outer diameter grows, the tread portion is stretched and weakened, and the increased amount of deformation of the tread as the outer diameter increases may damage the tread.

Therefore, in the present disclosure, the virtual volume V ($mm^3$) and the cross-sectional width Wt (mm) of the tire are tried to satisfy

$$[(V + 1.5 \times 10^7) / Wt] \leqq 2.88 \times 10^5 \text{ (formula 2)}.$$

In this way, it is considered that, by reducing the virtual volume V of the tire in accordance with the decrease in the cross-sectional width Wt of the tire, and reducing the volume of the tire itself, the growth of the outer diameter due to the expansion of the internal air is suppressed, and deformation of the tread can be reduced, and generation of heat can be reduced. In addition, since the growth of the outer diameter can be suppressed, the tread is unlikely to be weakened, and it is considered that the resistance to damage is enhanced.

[$(V + 1.5 \times 10^7)$ / Wt] is more preferably $2.87 \times 10^5$ or less, further preferably $2.86 \times 10^5$ or less, further preferably $2.79 \times 10^5$ or less, further preferably $2.60 \times 10^5$ or less, further preferably $2.58 \times 10^5$ or less, further preferably $2.54 \times 10^5$ or less, further preferably $2.50 \times 10^5$ or less, further preferably $2.47 \times 10^5$ or less, further preferably $2.42 \times 10^5$ or less, further preferably $2.26 \times 10^5$ or less, further preferably $2.25 \times 10^5$ or less, further preferably $2.24 \times 10^5$ or less, further preferably $2.21 \times 10^5$ or less, further preferably $2.20 \times 10^5$ or less, further preferably $2.19 \times 10^5$ or less, further preferably $2.18 \times 10^5$ or less, and further preferably $2.16 \times 10^5$ or less.

At this time, it is more preferable that

$$[(V + 2.0 \times 10^7) / Wt] \leqq 2.88 \times 10^5 \text{ (Formula 3)},$$

and further preferable that

$$[(V + 2.5 \times 10^7) / Wt] \leqq 2.88 \times 10^5 \text{ (Formula 4)}.$$

The above [$(V + 2.0 \times 10^7)$ / Wt] is further preferably $2.83\times10^5$ or less, further preferably $2.79\times10^5$ or less, further preferably 2.77x105 or less, further preferably $2.75\times10^5$ or less, further preferably $2.64\times10^5$ or less, further preferably $2.47\times10^5$ or less, further preferably $2.46\times10^5$ or less, further preferably $2.45\times10^5$ or less, and further preferably $2.44\times10^5$ or less.

Further, [$(V + 2.5 \times 10^7)$ / Wt] is further preferably $2.86\times10^5$ or less, further preferably $2.75\times10^5$ or less, further preferably $2.74\times10^5$ or less, further preferably $2.73\times10^5$ or less, further preferably $2.71\times10^5$ or less, further preferably

$2.70\times10^5$ or less, further preferably $2.69\times10^5$ or less, and further preferably $2.68\times10^5$ or less.

(2) Rubber composition forming a tread portion

In the present disclosure, at least one of the rubber layers forming the tread portion is made of a rubber composition which contains a rubber component containing styrene-butadiene rubber and isoprene-based rubber. As a result, the styrene-butadiene rubber phase and the isoprene-based rubber phase can be phase-separated and entangled with each other, so that the distortion inside the rubber can be reduced.

In addition, by setting the loss tangent (30°C tan $\delta$) of the rubber composition measured under the conditions of 30°C, frequency of 10 Hz, initial strain of 5%, and dynamic strain rate of 1% to 0.14 or less, the heat generation at the tread portion can be reduced; and in combination with the fact that the distortion inside the rubber can be reduced, the temperature rise of the tire is suppressed, and deterioration of the durability of the rubber composition itself and the growth of the diameter are suppressed, so that damage to the tire can be prevented and durability can be improved.

The 30°Ctan $\delta$ is more preferably 0.12 or less, further preferably 0.10 or less.

Measurement of the above-mentioned 30°Ctan $\delta$ is performed on the rubber cut out from the radial outside of the groove bottom of the tire at least, preferably from the radial outside of the half depth of the deepest circumferential groove. Specifically, the measurement is performed using, for example, a viscoelasticity measuring device of "Eplexor (registered trademark)" manufactured by GABO.

When the tread is formed of plurality rubber layers and the innermost layer is the base rubber layer and the other layers are the cap rubber layer, this rubber composition is preferably used for the cap rubber layer. Among the cap rubber layers, it is particularly preferable to use it for the outermost rubber layer.

[2] More preferable embodiment of the tire according to the present disclosure.

The tire according to the present disclosure can obtain a larger effect by taking the following embodiment.

1. Aspect ratio

The tire according to the present disclosure is preferably a tire having an aspect ratio of 40% or more, whereby the height of the side portion of the tire can be increased to reduce the contribution of heat generation in the tread portion and deformation of tire can be made uniform over the entire tire, and the total heat generation of the tire can be sufficiently reduced. As a result, the rolling resistance during high-speed running can be further reduced, and the durability of the tire can be further improved.

The aspect ratio (%) described above can be obtained by the following formula using the cross-sectional height Ht (mm) and the cross-sectional width Wt (mm) of the tire when the internal pressure is 250 kPa.

$$(Ht/Wt) \times 100\ (\%)$$

The aspect ratio is more preferably 44% or more, further prefera bly 45% or more, further preferably 47.5% or more, further preferably 4 8% or more, further preferably 49% or more, further preferably 50% or more, further preferably 52.5% or more, further preferably 55% or more, further preferably 57% or more, and further preferably 59% or more. T here is no particular upper limit, but for example, it is 100% or less.

2. Relationship between loss tangent(tan $\delta$) and cross-sectional width Wt (mm)

As the cross-sectional width Wt increases, the contribution of heat generation from the tread portion increases, and it becomes difficult to control heat generation. Therefore, the present disclosers have examined the relationship between the loss tangent (30°Ctan $\delta$) and the cross-sectional width Wt (mm), and found that, if 30°Ctan $\delta \times$ Wt $\leqq$ 30.0 is satisfied, the heat generation can be controlled according to the width, the rolling resistance during high-speed running can be further reduced and the durability of the tire can be further improved. 30°Ctan $\delta \times$ Wt is more preferably 28.3 or less, further preferably 28.0 or less, further preferably 27.8 or less, further preferably 27.5 or less, further preferably 27.0 or less, and further preferably 25.7 or less.

In addition, it was found that satisfying 30°Ctan $\delta \times$ Wt $\leqq$ 25.0 is still more preferable. 30°Ctan $\delta \times$ Wt is still further preferably 24.8 or less, still further preferably 24.7 or less, still further preferably 24.2 or less, still further preferably 23.9 or less, still further preferably 22.6 or less, still further preferably 21.9 or less, still further preferably 21.3 or less, still further preferably 19.8 or less, and still further preferably 17.7 or less.

3. Tread groove

The tire according to the present disclosure has a circumferential groove continuously extending in the tire circumferential direction in the tread portion. The ratio of the groove width $L_{80}$ at a depth of 80% of the maximum depth of the circumferential groove to the groove width $L_0$ of the circumferential groove on the ground contact surface of the tread portion ($L_{80}$ / $L_0$) is preferably 0.3 to 0.7. As a result, it is possible to suppress the movement of the entire land portion on the bottom surface of the land portion of the tread portion, thereby sufficiently suppressing uneven wear of the tread portion and improving the durability during high-speed running. The ratio is more preferably 0.35 to 0.65, further preferably 0.40 to 0.60, and particularly preferably 0.45 to 0.55. The circumferential grooves may be grooves extending continuously in the tire circumferential direction, and nonlinear grooves such as zigzag grooves and wavy grooves are also included in the circumferential grooves.

The above-mentioned $L_0$ and $L_{80}$ refer to the linear distance ($L_0$) between the groove edges on the tread surface of the tread circumferential groove of a tire, and to the minimum distance ($L_{80}$) between the groove walls at a position where the groove depth is 80%, respectively, in a state where the tire is installed on a standardized rim, the internal pressure is 250 kPa, and no load is applied. To put it simply, they can be obtained by putting the bead portion of the section cut out in the radial direction with a width of 2 to 4 cm in a pressed state according to the rim width.

It is preferable that the tread portion has a plurality of circumferential grooves, and the total cross-sectional area of the plurality of circumferential grooves is 10 to 30% of the cross-sectional area of the tread portion. It is considered that this makes it possible to suppress the movement of the tread portion, and uneven wear of the tread portion during high-speed running can be suppressed and the durability can be improved. It is more preferably 15 to 27%, further preferably 18 to 25%, and particularly preferably 21 to 23%.

The cross-sectional area of the circumferential groove refers to the total value of the area composed of a straight line connecting the ends of the tread circumferential groove and a groove wall in a tire installed on a standardized rim, having an internal pressure of 250 kPa and in a no-load state. To put it simply, they can be obtained by putting the bead portion of the section cut out in the radial direction with a width of 2 to 4 cm in a pressed state according to the rim width.

Further, it is preferable that the tread portion has a plurality of lateral grooves extending in the tire axial direction, and the total volume of the plurality of lateral grooves is 2.0 to 5.0% of the volume of the tread portion. It is considered that this makes it possible to suppress the movement of the tread portion, suppress the uneven wear, and improve the durability. It is more preferably 2.2 to 4.0%, further preferably 2.5 to 3.5%, and particularly preferably 2.7 to 3.0%.

The volume of the lateral groove described above refers to the total volume of the volume composed of the surface connecting the ends of the lateral groove and the groove wall in a tire installed on a standardized rim, having an internal pressure of 250 kPa and in a no-load state. To put it simply, it can be obtained by calculating the volume of each lateral groove and multiplying it by the number of grooves, in a state where the bead portion of the section cut out in the radial direction with a width of 2 to 4 cm is pressed down according to the rim width. Further, the volume of the tread portion can be calculated by calculating the area of the portion excluding the lateral groove from the section and multiplying it by the outer diameter, then obtaining the difference between the calculation result and the volume of the lateral groove.

In order to suppress uneven wear of the tread portion and further improve the durability, it is preferred that at least one of these lateral grooves has a groove width ratio (Gw/Gd), i.e. ratio of groove width Gw to groove depth Gd, of 0.50 to 0. 80. The ratio is more preferably 0.53 to 0.77, further preferably 0.55 to 0.75, and particularly preferably 0.60 to 0.70.

The groove width and groove depth of the lateral groove described above refer to the maximum length of the straight lines connecting the tread surface ends of the lateral groove, which are perpendicular to the groove direction, and to the maximum depth of the lateral groove, respectively, in the tire in a state where the internal pressure is 250 kPa and no load is applied. To put it simply, it can be calculated in a state where the bead portion of the section cut out in the radial direction with a width of 2 to 4 cm is put down in a pressed state according to the rim width.

4. Tire shape

In the tire according to the present disclosure, when the tire is installed on a standardized rim and the internal pressure is 250 kPa, the specific outer diameter Dt (mm) is preferably, for example, 515 mm or more, more preferably 558 mm or more, further preferably 585 mm or more, further preferably 649 mm or more, further preferably 658 mm or more, further preferably 663 mm or more, further preferably 664 mm or more, further preferably 665 mm or more, further preferably 672 mm or more, and most preferably 673 mm or more.

On the other hand, it is preferably less than 843 mm, more preferably 734 mm or less, further preferably less than 725 mm, further preferably 718 mm or less, further preferably 717 mm or less, further preferably 716 mm or less, further preferably 713 mm or less, further preferably 710 mm or less, further preferably less than 707 mm, further preferably 693 mm or less, further preferably 691 mm or less, further preferably less than 685 mm, further preferably

684 mm or less, further preferably 680 mm or less, further preferably 679 mm or less, and further preferably 674 mm or less.

The specific cross-sectional width Wt (mm) is preferably 115 mm or more, more preferably 130 mm or more, further preferably 150 mm or more, further preferably 170 mm or more, still more preferably 176 mm or more, still more preferably 177 mm or more, still more preferably 182 mm or more, still more preferably 183 mm or more, and even more preferably 185 mm, and most preferably 193 mm or more.

On the other hand, it is preferably less than 305 mm, more preferably less than 245 mm, further preferably 231 mm or less, further preferably 229 mm or less, further preferably 228 mm or less, further preferably 227 mm or less, further preferably 226 mm or less, further preferably 225 mm or less, further preferably less than 210 mm, further preferably less than 205 mm, further preferably 202 mm or less, further preferably 201 mm or less, further preferably 200 mm or less, further preferably less than 200 mm, further preferably 199 mm or less, further preferably 198 mm or less, and further preferably 196 mm or less.

The specific cross-sectional height Ht (mm) is, for example, preferably 37 mm or more, more preferably 69 mm or more, further preferably 70 mm or more, further preferably 78 mm or more, further preferably 79 mm or more, further preferably 80 mm or more, further preferably 87 mm or more, further preferably 88 mm or more, further preferably 90 mm or more, further preferably 95 mm or more, further preferably 96 mm or more, further preferably 98 mm or more, and further preferably 99 mm or more.

On the other hand, it is preferably less than 180 mm, more preferably 117 mm or less, further preferably 113 mm or less, further preferably less than 112 mm, further preferably 105 mm or less, further preferably 101 mm or less, and further preferably less than 101 mm.

The specific virtual volume V is preferably 13,000,000 $mm^3$ or more, more preferably 23,093,883 $mm^3$ or more, further preferably 23,412,074 $mm^3$ or more, further preferably 23,599,328 $mm^3$ or more, further preferably 28,431,992 $mm^3$ or more, further preferably 28,526,824 $mm^3$ or more, further preferably 29,000,000 $mm^3$ or more, further preferably 29,087,378 $mm^3$ or more, further preferably 30,152,956 $mm^3$ or more, further preferably 30,354,118 $mm^3$ or more, further preferably 34,384,955 $mm^3$ or more, further preferably 35,417,448 $mm^3$ or more, further preferably 35,785,417 $mm^3$ or more, further preferably 35,954,077 $mm^3$ or more, further preferably 36,000,000 $mm^3$ or more, further preferably 36,203,610 $mm^3$ or more, and further preferably 37,040,131 $mm^3$ or more.

On the other hand, it is preferably less than 66,000,000 $mm^3$, more preferably 50,043,281 $mm^3$ or less, further preferably less than 44,000,000 $mm^3$, further preferably 43,478,150 $mm^3$ or less, further preferably 42,618,582 $mm^3$ or less, further preferably 40,161,995 $mm^3$ or less, and further preferably less than 38,800,000 $mm^3$.

Further, in the present disclosure, considering the stability of the riding comfort during traveling, $(Dt - 2 \times Ht)$ is preferably 450 mm or more, more preferably 457 mm or more, further preferably 470 mm or more, further preferably 480 mm or more, further preferably 482 mm or more, and further preferably 483 mm or more.

On the other hand, considering the deformation of the tread portion, it is preferably less than 560 mm, more preferably 559 mm or less, further preferably 558 mm or less, further preferably 533 mm or less, further preferably less than 530 mm, further preferably less than 510 mm, further preferably 508 mm or less, and further preferably 507 mm or less.

[3] Embodiment

Hereinafter, the present disclosure will be specifically described based on the embodiments.

1. Rubber composition forming the tread portion

The rubber composition forming the tread portion of the tire according to the present disclosure can be obtained by appropriately adjusting the type and amount of various compounding materials such as rubber components, fillers, softeners, vulcanizing agents and vulcanization accelerators described below.

(1) Rubber component

In the present embodiment, as the rubber component, rubber (polymer) generally used for producing tires such as styrene-butadiene rubber (SBR), isoprene-based rubber, butadiene rubber (BR), and nitrile rubber (NBR) can be used. Among these, it is preferable to use styrene butadiene rubber (SBR) and isoprene-based rubber. Since these rubbers can be entangled with each other with phase separation of each of the rubber phases, distortion inside the rubber can be reduced.

(a) SBR

The content of SBR in 100 parts by mass of the rubber component is, for example, preferably more than 5

parts by mass, more preferably more than 10 parts by mass, and further preferably 20 parts by mass or more and 50 parts by mass or more from the viewpoint of wet grip performance. On the other hand, it is preferably less than 100 parts by mass, and more preferably 70 parts by mass or less, from the viewpoint of heat generation during high-speed running. The weight average molecular weight of SBR is, for example, more than 100,000 and less than 2 million. The styrene content of SBR is preferably more than 5% by mass, more preferably more than 10% by mass, and even more preferably more than 20% by mass, from the viewpoint of obtaining good wet grip performance, for example. On the other hand, from the viewpoint of heat generation and durability during high-speed running, it is preferably less than 50% by mass, more preferably less than 40% by mass, and even more preferably less than 35% by mass. The vinyl bond amount (1,2-bonded butadiene unit amount) of SBR is, for example, more than 5% by mass and less than 70% by mass. The structure identification of SBR (measurement of styrene content and vinyl bond amount) can be performed using, for example, an apparatus of the JNM-ECA series manufactured by JEOL Ltd.

The SBR is not particularly limited, and for example, emulsion-polymerized styrene-butadiene rubber (E-SBR), solution-polymerized styrene-butadiene rubber (S-SBR) and the like can be used. The SBR may be either a non-modified SBR or a modified SBR.

The modified SBR may be any SBR having a functional group that interacts with a filler such as silica. Examples thereof include

end-modified SBR (end-modified SBR having the above functional group at the terminal) in which at least one end of the SBR is modified with a compound having the above functional group (modifying agent),
main chain modified SBR having the functional group in the main chain,
main chain terminal modified SBR having the functional group at the main chain and the terminal (for example, a main chain terminal modified SBR having the above functional group to the main chain and having at least one end modified with the above modifying agent), and
end-modified SBR which is modified (coupled) with a polyfunctional compound having two or more epoxy groups in the molecule, and into which an epoxy group or hydroxyl group has been introduced,

Examples of the functional group include an amino group, an amide group, a silyl group, an alkoxysilyl group, an isocyanate group, an imino group, an imidazole group, a urea group, an ether group, a carbonyl group, an oxycarbonyl group, a mercapto group, a sulfide group, a disulfide group, a sulfonyl group, a sulfinyl group, a thiocarbonyl group, an ammonium group, an imide group, a hydrazo group, an azo group, a diazo group, a carboxyl group, a nitrile group, a pyridyl group, an alkoxy group, a hydroxyl group, an oxy group, and an epoxy group. In addition, these functional groups may have a substituent.

Further, as the modified SBR, for example, an SBR modified with a compound (modifying agent) represented by the following formula can be used.

[Chemical 1]

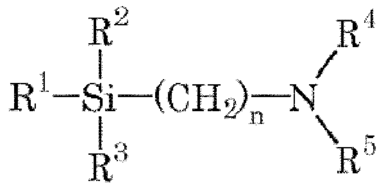

In the formula, $R^1$, $R^2$ and $R^3$ represent, the same or different, alkyl group, alkoxy group, silyloxy group, acetal group, carboxyl group (-COOH), mercapto group (-SH) or derivatives thereof. $R^4$ and $R^5$ represent, the same or different, hydrogen atoms or alkyl groups. $R^4$ and $R^5$ may be combined to form a ring structure with nitrogen atoms. n represents an integer.

As the modified SBR modified with the compound represented by the above formula (modifying agent), a solution-polymerized styrene-butadiene rubber (S-SBR) in which the polymerization terminal (active terminal) is modified with the compound represented by the above formula (such as modified SBR described in JP-A-2010-111753) can be used.

As $R^1$, $R^2$ and $R^3$, an alkoxy group is preferable (preferably an alkoxy group having 1 to 8 carbon atoms, more preferably an alkoxy group having 1 to 4 carbon atoms). As $R^4$ and $R^5$, an alkyl group (preferably an alkyl group having 1 to 3 carbon atoms) is preferable. n is preferably 1 to 5, more preferably 2 to 4, and even more preferably 3. Further, when $R^4$ and $R^5$ are bonded to form a ring structure together with a nitrogen atom, a 4- to 8-membered ring is preferable. The alkoxy group also includes a cycloalkoxy group (for example, cyclohexyloxy group) and an aryloxy group (for

example, phenoxy group, benzyloxy group).

Specific examples of the above modifying agent include 2-dimethylaminoethyltrimethoxysilane, 3-dimethylaminopropyltrimethoxysilane, 2-dimethylaminoethyltriethoxysilane, 3-dimethylaminopropyltriethoxysilane, 2-diethylaminoethyltrimethoxysilane, 3-diethylaminopropyltrimethoxysilane, 2-diethylaminoethyltriethoxysilane, and 3-diethylaminopropyltriethoxysilane. These may be used alone or in combination of two or more.

Further, as the modified SBR, a modified SBR modified with the following compound (modifying agent) can also be used. Examples of the modifying agent include

polyglycidyl ethers of polyhydric alcohols such as ethylene glycol diglycidyl ether, glycerin triglycidyl ether, trimethylolethanetriglycidyl ether, and trimethylolpropane triglycidyl ether;
polyglycidyl ethers of aromatic compounds having two or more phenol groups such as diglycidylated bisphenol A;
polyepoxy compounds such as 1,4-diglycidylbenzene, 1,3,5-triglycidylbenzene, and polyepoxidized liquid polybutadiene;
epoxy group-containing tertiary amines such as 4,4' -diglycidyl-diphenylmethylamine, and 4,4'-diglycidyl-dibenzylmethylamine;
diglycidylamino compounds such as diglycidylaniline, N, N'-diglycidyl-4-glycidyloxyaniline, diglycidyl orthotoluidine, tetraglycidylmetaxylenidiamine, tetraglycidylaminodiphenylmethane, tetraglycidyl-p-phenylenediamine, diglycidylaminomethylcyclohexane, and tetraglycidyl-1,3-bisaminomethylcyclohexane;
amino group-containing acid chlorides such as bis- (1-methylpropyl) carbamate chloride, 4-morpholincarbonyl chloride, 1-pyrrolidincarbonyl chloride, N, N-dimethylcarbamide acid chloride, and N, N-diethylcarbamide acid chloride;
epoxy group-containing silane compounds such as 1,3-bis-(glycidyloxypropyl) -tetramethyldisiloxane, and (3-glycidyloxypropyl) - pentamethyldisiloxane;
sulfide group-containing silane compound such as (trimethylsilyl) [3- (trimethoxysilyl) propyl] sulfide, (trimethylsilyl) [3- (triethoxysilyl) propyl] sulfide, (trimethylsilyl) [3- (tripropoxysilyl) propyl] sulfide, (trimethylsilyl) [3-(tributoxysilyl) propyl] sulfide, (trimethylsilyl) [3- (methyldimethoxysilyl) propyl] sulfide, (trimethylsilyl) [3- (methyldiethoxysilyl) propyl] sulfide, (trimethylsilyl) [3- (methyldipropoxysilyl) propyl] sulfide, and (trimethylsilyl) [3- (methyldibutoxysilyl) propyl] sulfide;
N-substituted aziridine compound such as ethyleneimine and propyleneimine;
alkoxysilanes such as methyltriethoxysilane, N, N-bis (trimethylsilyl) -3-aminopropyltrimethoxysilane, N, N-bis (trimethylsilyl) -3-aminopropyltriethoxysilane, N, N-bis (trimethylsilyl)
aminoethyltrimethoxysilane, and N, N-bis (trimethylsilyl) aminoethyltriethoxysilane;
(thio) benzophenone compound having an amino group and/or a substituted amino group such as 4-N, N-dimethylaminobenzophenone, 4-N, N-di-t-butylaminobenzophenone, 4-N, N-diphenylamino benzophenone, 4,4'-bis (dimethylamino) benzophenone, 4,4'-bis (diethylamino) benzophenone, 4,4'-bis (diphenylamino) benzophenone, and N, N, N', N'-bis-(tetraethylamino) benzophenone;
benzaldehyde compounds having an amino group and/or a substituted amino group such as 4-N, N-dimethylaminobenzaldehyde, 4-N, N-diphenylaminobenzaldehyde, and 4-N, N-divinylamino benzaldehyde;
N-substituted pyroridone such as N-methyl-2-pyrrolidone, N-vinyl-2-pyrrolidone, N-phenyl-2-pyrrolidone, N-t-butyl-2-pyrrolidone, and N-methyl-5-methyl-2-pyrrolidone;
N- substituted piperidone such as methyl-2-piperidone, N-vinyl-2-piperidone, and N-phenyl-2-piperidone;
N-substituted lactams such as N-methyl -ε-caprolactam, N-phenyl-ε-caprolactum, N-methyl-ω-laurilolactum, N-vinyl-ω-laurilolactum, N-methyl-β-propiolactam, and N-phenyl-β-propiolactam; and
N, N-bis- (2,3-epoxypropoxy)-aniline, 4,4-methylene-bis- (N, N-glycidylaniline), tris- (2,3-epoxypropyl)-1,3,5-triazine-2,4,6-triones, N, N-diethylacetamide, N-methylmaleimide, N, N-diethylurea, 1,3-dimethylethylene urea, 1,3-divinylethyleneurea, 1,3-diethyl-2-imidazolidinone, 1-methyl-3-ethyl-2-imidazolidinone, 4-N, N-dimethylaminoacetophenone, 4-N, N-diethylaminoacetophenone, 1,3-bis (diphenylamino)-2-propanone, and 1,7 -bis(methylethylamino)-4-heptanone. The modification with the above compound (modifying agent) can be carried out by a known method.

As the SBR, for example, SBR manufactured and sold by Sumitomo Chemical Co., Ltd., JSR Corporation, Asahi Kasei Co., Ltd., Nippon Zeon Corporation, etc. can be used. The SBR may be used alone or in combination of two or more.

(b) Isoprene rubber

The content (total content) of the isoprene-based rubber in 100 parts by mass of the rubber component is preferably more than 5 parts by mass, and more than 25 parts by mass, from the viewpoint of obtaining good low heat generation and durability during high-speed running. More preferably, it is 30 parts by mass or more, and even more

preferably 40 parts by mass or more.

On the other hand, the upper limit of the content of the isoprene-based rubber is not particularly limited, but from the viewpoint of wet grip performance, it is preferably less than 100 parts by mass, and more preferably 70 parts by mass or less. Examples of the isoprene-based rubber include natural rubber (NR), isoprene rubber (IR), reformed NR, modified NR, and modified IR.

As the NR, for example, SIR20, RSS # 3, TSR20 and the like, which are common in the tire industry, can be used. The IR is not particularly limited, and for example, IR 2200 and the like, which are common in the tire industry, can be used. Reformed NR includes deproteinized natural rubber (DPNR), high-purity natural rubber (UPNR), and the like. Modified NR includes epoxidized natural rubber (ENR), hydrogenated natural rubber (HNR), grafted natural rubber, and the like. Modified IR includes epoxidized isoprene rubber, hydrogenated isoprene rubber, grafted isoprene rubber, and the like. These may be used alone or in combination of two or more.

(c) BR

The rubber composition may further contain BR, if desired. In this case, the content of BR in 100 parts by mass of the rubber component is preferably more than 5 parts by mass, more preferably 10 parts by mass or more, from the viewpoint of wear resistance. On the other hand, from the viewpoint of rolling resistance during high-speed running, the amount is preferably less than 100 parts by mass, more preferably less than 30 parts by mass, and even more preferably less than 20 parts by mass. The weight average molecular weight of BR is, for example, more than 100,000 and less than 2,000,000. The vinyl bond amount of BR is, for example, more than 1% by mass and less than 30% by mass. The cis content of BR is, for example, more than 1% by mass and less than 98% by mass. The trans amount of BR is, for example, more than 1% by mass and less than 60% by mass.

BR is not particularly limited, and BR with high cis content (90% or more of cis content), BR with low cis content, BR containing syndiotactic polybutadiene crystals, and the like can be used. BR may be either non-modified BR or modified BR, and modified BR includes modified BR into which the above functional groups have been introduced. These may be used alone or in combination of two or more. The cis content can be measured by infrared absorption spectrometry.

As BR, for example, products of Ube Industries, Ltd., JSR Corporation, Asahi Kasei Co., Ltd., Nippon Zeon Co., Ltd., etc. can be used.

(d) Other rubber components

Further, as another rubber component, the rubber composition may contain a rubber (polymer) generally used in the production of tires, such as nitrile rubber (NBR).

(2) Compounding materials other than rubber components (a) Filler

In the present embodiment, the rubber composition preferably contains a filler. Specific examples of the filler include silica, carbon black, graphite, calcium carbonate, talc, alumina, clay, aluminum hydroxide, and mica. Among these, silica and carbon black can be preferably used as the reinforcing agent. When silica is used, it is preferable to use it in combination with a silane coupling agent.

(a-1) Silica

The rubber composition preferably contains silica. The BET specific surface area of the silica is preferably more than 140 $m^2/g$, more preferably more than 160 $m^2/g$, from the viewpoint of obtaining good durability performance. On the other hand, from the viewpoint of obtaining good rolling resistance at high-speed running, it is preferably less than 250 $m^2/g$, and more preferably less than 220 $m^2/g$. The above-mentioned BET specific surface area is the value of $N_2SA$ measured by the BET method according to ASTM D3037-93.

When silica is used as the filling reinforcing agent, the content of silica with respect to 100 parts by mass of the rubber component is preferably more than 35 parts by mass, more preferably more than 40 parts by mass, from the viewpoint of obtaining good durability performance. On the other hand, from the viewpoint of obtaining good rolling resistance during high-speed running, it is preferably less than 70 parts by mass, more preferably less than 65 parts by mass, and even more preferably less than 60 parts by mass and less than 50 parts by mass.

Examples of silica include dry silica (anhydrous silica) and wet silica (hydrous silica). Among them, wet silica is preferable because it has large number of silanol groups.

As the silica, for example, products of Degussa, Rhodia, Tosoh Silica Co., Ltd., Solvay Japan Co., Ltd., Tokuyama Corporation, etc. can be used.

(a-2) Silane coupling agent

The rubber composition preferably contains a silane coupling agent together with silica. The silane coupling agent is not particularly limited. Examples of the silane coupling agent include

sulfide-based ones such as bis(3-triethoxysilylpropyl)tetrasulfide, bis (2-triethoxysilylethyl)tetrasulfide, bis (4-triethoxysilylbutyl)tetrasulfide, bis(3-trimethoxysilylpropyl) tetrasulfide, bis(2-trimethoxysilylethyl) tetrasulfide, bis(2-triethoxysilylethyl)trisulfide, bis(4-trimethoxysilylbutyl) trisulfide, bis(3-triethoxysilylpropyl)disulfide, bis(2-triethoxysilylethyl) disulfide, bis(4-triethoxysilylbutyl)disulfide, bis(3-trimethoxysilylpropyl) disulfide, bis(2-trimethoxysilylethyl)disulfide, bis(4-trimethoxysilylbutyl)disulfide, 3-trimethoxysilylpropyl-N, N-dimethylthiocarbamoyltetrasulfide, 2-triethoxysilylethyl-N, N-dimethylthiocarbamoyltetrasulfide, and 3-triethoxysilylpropylmethacrylatemonosulfide;
mercapto-based ones such as 3-mercaptopropyltrimethoxysilane, 2-mercaptoethyltriethoxysilane, and NXT and NXT-Z manufactured by Momentive;
vinyl-based ones such as vinyl triethoxysilane, and vinyl trimethoxysilane;
amino-based ones such as 3-aminopropyltriethoxysilane and 3-aminopropyltrimethoxysilane;
glycidoxy-based ones such as $\gamma$-glycidoxypropyltriethoxysilane and $\gamma$- glycidoxypropyltrimethoxy silane;
nitro-based ones such as 3-nitropropyltrimethoxysilane, and 3-nitropropyltriethoxysilane; and
chloro-based ones such as 3-chloropropyltrimethoxysilane and 3-chloropropyltriethoxysilane. These may be used alone or in combination of two or more.

As the silane coupling agent, for example, products of Degussa, Momentive, Shinetsu Silicone Co., Ltd., Tokyo Chemical Industry Co., Ltd.,
Azumax Co., Ltd., Toray Dow Corning Co., Ltd., etc. can be used.

The content of the silane coupling agent is, for example, more than 3 parts by mass and less than 25 parts by mass, and more preferably 10 parts by mass or more, with respect to 100 parts by mass of silica.

(a-3) Carbon black

The rubber composition preferably contains carbon black. The content of carbon black is, for example, more than 1 part by mass and less than 200 parts by mass, and more preferably 15 parts by mass or more, with respect to 100 parts by mass of the rubber component.

The carbon black is not particularly limited, and examples thereof includes furnace black (furnace carbon black) such as SAF, ISAF, HAF, MAF, FEF, SRF, GPF, APF, FF, CF, SCF and ECF; acetylene black (acetylene carbon black); thermal black (thermal carbon black) such as FT and MT; and channel black (channel carbon black) such as EPC, MPC and CC. These may be used alone or in combination of two or more.

Nitrogen adsorption specific surface area ($N_2SA$) of carbon black is, for example, more than 30 $m^2/g$ and less than 250 $m^2/g$. The amount of dibutyl phthalate (DBP) absorbed by carbon black is, for example, more than 50 ml/100 g and less than 250 ml/100 g. The nitrogen adsorption specific surface area of carbon black is measured according to ASTM D4820-93, and the amount of DBP absorbed is measured according to ASTM D2414-93.

The specific carbon black is not particularly limited, and examples thereof include N134, N110, N220, N234, N219, N339, N330, N326, N351, N550, and N762. Commercially available products include, for example, products of Asahi Carbon Co., Ltd., Cabot Japan Co., Ltd., Tokai Carbon Co., Ltd., Mitsubishi Chemical Corporation, Lion Corporation, Shin Nikka Carbon Co., Ltd., Columbia Carbon Co., Ltd., etc. These may be used alone or in combination of two or more.

(a-4) Other fillers

The rubber composition may further contain fillers such as graphite, calcium carbonate, talc, alumina, clay, aluminum hydroxide, and mica, which are generally used in the tire industry, in addition to the above-mentioned carbon black and silica. These contents are, for example, more than 0.1 part by mass and less than 200 parts by mass with respect to 100 parts by mass of the rubber component.

(b) Softener

The rubber composition may contain oil (including extender oil), liquid rubber, or the like, as a softener. The total content of these is preferably more than 5 parts by mass, more preferably more than 10 parts by mass with respect to 100 parts by mass of the rubber component. On the other hand, less than 70 parts by mass is preferable, less than 50 parts by mass is more preferable, and less than 30 parts by mass is further preferable. The oil content also includes the amount of oil contained in rubber (oil spread rubber).

Examples of the oil include mineral oil (generally referred to as process oil), vegetable oil and fat, or a mixture thereof. As the mineral oil (process oil), for example, a paraffinic process oil, an aroma-based process oil, a naphthene process oil, or the like can be used. Examples of the vegetable oils and fats include castor oil, cottonseed oil, linseed oil, rapeseed oil, soybean oil, palm oil, coconut oil, peanut oil, rosin, pine oil, pine tar, tall oil, corn oil, rice oil, beni flower oil, sesame oil, olive oil, sunflower oil, palm kernel oil, camellia oil, jojoba oil, macadamia nut oil, and tung oil. These may be used alone or in combination of two or more.

Specific examples of process oil (mineral oil) include products of Idemitsu Kosan Co., Ltd., Sankyo Yuka Kogyo Co., Ltd., Japan Energy Co., Ltd., Olisoy Co., Ltd., H & R Co., Ltd., Toyokuni Seiyu Co., Ltd., Showa Shell Sekiyu Co., Ltd., and Fuji Kosan Co., Ltd.

The liquid rubber mentioned as the softener is a polymer in a liquid state at room temperature (25°C) and is a polymer having a monomer similar to that of solid rubber as a constituent element. Examples of the liquid rubber include farnesene-based polymers, liquid diene-based polymers, and hydrogenated additives thereof.

The farnesene-based polymer is a polymer obtained by polymerizing farnesene, and has a structural unit based on farnesene. Farnesene includes isomers such as $\alpha$-farnesene ((3E, 7E) -3,7,11-trimethyl-1,3,6,10-dodecatetraene) and $\beta$-farnesene (7,11-dimethyl-3-methylene-1, 6,10-dodecatorien).

The farnesene-based polymer may be a homopolymer of farnesene (farnesene homopolymer) or a copolymer of farnesene and a vinyl monomer (farnesene-vinyl monomer copolymer).

Examples of the liquid diene polymer include a liquid styrene-butadiene copolymer (liquid SBR), a liquid butadiene polymer (liquid BR), a liquid isoprene polymer (liquid IR), and a liquid styrene isoprene copolymer (liquid SIR).

The liquid diene polymer has a polystyrene-equivalent weight average molecular weight (Mw) measured by gel permeation chromatography (GPC) of, for example, more than $1.0 \times 10^3$ and less than $2.0 \times 10^5$. In the present specification, Mw of the liquid diene polymer is a polystyrene conversion value measured by gel permeation chromatography (GPC).

The content of the liquid rubber (total content of the liquid farnesene-based polymer, the liquid diene-based polymer, etc.) is, for example, more than 1 part by mass and less than 100 parts by mass with respect to 100 parts by mass of the rubber component.

As the liquid rubber, for example, products of Kuraray Co., Ltd. and Clay Valley Co., Ltd. can be used.

(c) Resin component

Further, the rubber composition preferably contains a resin component, if necessary. The resin component may be solid or liquid at room temperature, and specific resin components include styrene resin, coumarone resin, terpene resin, C5 resin, C9 resin, C5C9 resin, acrylic resin, and the like. Two or more kinds of the resin component may be used in combination. The content of the resin component is preferably more than 2 parts by mass, more preferably 3 parts by mass or more, with respect to 100 parts by mass of the rubber component. On the other hand, it is preferably less than 45 parts by mass, and more preferably less than 30 parts by mass.

The styrene resin is a polymer using a styrene monomer as a constituent monomer, and examples thereof include a polymer obtained by polymerizing a styrene monomer as a main component (50% by mass or more). Specifically, it includes homopolymers obtained by individually polymerizing styrene monomers (styrene, o-methylstyrene, m-methylstyrene, p-methylstyrene, $\alpha$-methylstyrene, p-methoxystyrene, p-tert-butylstyrene, p-phenylstyrene, o-chlorostyrene, m-chlorostyrene, p-chlorostyrene, etc.), copolymers obtained by copolymerizing two or more styrene monomers, and, in addition, copolymers obtained by copolymerizing a styrene monomer and other monomers that can be copolymerized with the styrene monomer.

Examples of the other monomers include acrylonitriles such as acrylonitrile and methacrylate; unsaturated carboxylic acids such as acrylic acid and methacrylic acid; unsaturated carboxylic acid esters such as methyl acrylate and methyl methacrylate; dienes such as chloroprene, butadiene, and isoprene, olefins such as 1-butene and 1-pentene; $\alpha$, $\beta$-unsaturated carboxylic acids such as maleic anhydride and acid anhydrides thereof.

As the coumarone-based resin, coumarone-indene resin is preferably used. Coumarone-indene resin is a resin containing coumarone and indene as monomer components constituting the skeleton (main chain) of the resin. Examples of the monomer component contained in the skeleton other than coumarone and indene include styrene, $\alpha$-methylstyrene, methylindene, and vinyltoluene.

The content of the coumarone-indene resin is, for example, more than 1.0 part by mass and less than 50.0 parts by mass with respect to 100 parts by mass of the rubber component.

The hydroxyl value (OH value) of the coumarone-indene resin is, for example, more than 15 mgKOH/g and less than 150 mgKOH/g. The OH value is the amount of potassium hydroxide required to neutralize acetic acid bonded to a hydroxyl group when 1 g of the resin is acetylated, and is expressed in milligrams. It is a value measured by potentiometric titration method (JIS K 0070: 1992).

The softening point of the coumarone-indene resin is, for example, higher than 30 °C and lower than 160 °C.

The softening point is the temperature at which the ball drops when the softening point defined in JIS K 6220-1: 2001 is measured by a ring-ball type softening point measuring device.

Examples of the terpene resins include polyterpenes, terpene phenols, and aromatic-modified terpene resins. Polyterpene is a resin obtained by polymerizing a terpene compound and a hydrogenated product thereof. The terpene compound is a hydrocarbon having a composition of $(C_5H_8)_n$ or an oxygen-containing derivative thereof, which is a compound having a terpene classified as monoterpenes ($C_{10}H_{16}$), sesquiterpenes ($C_{15}H_{24}$), diterpenes ($C_{20}H_{32}$), etc. as the basic skeleton. Examples thereof include α-pinene, β-pinene, dipentene, limonene, myrcene, alloocimene, osimene, α-phellandrene, α-terpinene, γ-terpinene, terpinolene, 1,8-cineol, 1,4-cineol, α-terpineol, β-terpineol, and γ-terpineol.

Examples of the polyterpene include terpene resins such as α-pinene resin, β-pinene resin, limonene resin, dipentene resin, and β-pinene/limonene resin, which are made from the above-mentioned terpene compound, as well as hydrogenated terpene resin obtained by hydrogenating the terpene resin. Examples of the terpene phenol include a resin obtained by copolymerizing the above-mentioned terpene compound and the phenol compound, and a resin obtained by hydrogenating above-mentioned resin. Specifically, a resin obtained by condensing the above-mentioned terpene compound, the phenol compound and the formalin can be mentioned. Examples of the phenol compound include phenol, bisphenol A, cresol, and xylenol. Examples of the aromatic-modified terpene resin include a resin obtained by modifying a terpene resin with an aromatic compound, and a resin obtained by hydrogenating above-mentioned resin. The aromatic compound is not particularly limited as long as it is a compound having an aromatic ring, and examples thereof include phenol compounds such as phenol, alkylphenol, alkoxyphenol, and unsaturated hydrocarbon group-containing phenol; naphthol compounds such as naphthol, alkylnaphthol, alkoxynaphthol, and unsaturated hydrocarbon group-containing naphthols; styrene derivatives such as styrene, alkylstyrene, alkoxystyrene, unsaturated hydrocarbon group-containing styrene; coumarone, and indene.

The C5 resin refers to a resin obtained by polymerizing a C5 fraction. Examples of the C5 fraction include petroleum fractions having 4 to 5 carbon atoms such as cyclopentadiene, pentene, pentadiene, and isoprene. As the C5-based petroleum resin, a dicyclopentadiene resin (DCPD resin) is preferably used.

The C9 resin refers to a resin obtained by polymerizing a C9 fraction, and may be hydrogenated or modified. Examples of the C9 fraction include petroleum fractions having 8 to 10 carbon atoms such as vinyltoluene, alkylstyrene, indene, and methyl indene. As the specific examples, a coumarone-indene resin, a coumarone resin, an indene resin, and an aromatic vinyl resin are preferably used. As the aromatic vinyl resin, a homopolymer of α-methylstyrene or styrene or a copolymer of α-methylstyrene and styrene is preferable because it is economical, easy to process, and excellent in heat generation. A copolymer of α-methylstyrene and styrene is more preferred. As the aromatic vinyl-based resin, for example, those commercially available from Clayton, Eastman Chemical, etc. can be used.

The C5C9 resin refers to a resin obtained by copolymerizing the C5 fraction and the C9 fraction, and may be hydrogenated or modified. Examples of the C5 fraction and the C9 fraction include the above-mentioned petroleum fraction. As the C5C9 resin, for example, those commercially available from Tosoh Corporation, LUHUA, etc. can be used.

The acrylic resin is not particularly limited, but for example, a solvent-free acrylic resin can be used.

As the solvent-free acrylic resin, a (meth) acrylic resin (polymer) synthesized by a high-temperature continuous polymerization method (high-temperature continuous lump polymerization method: a method described in US 4414370 B, JP 84-6207 A, JP 93-58805 A, JP 89-313522 A, US 5010166 B, Toa Synthetic Research Annual Report TREND2000 No. 3 p42-45, and the like) without using polymerization initiators, chain transfer agents, organic solvents, etc. as auxiliary raw materials as much as possible, can be mentioned. In the present disclosure, (meth) acrylic means methacrylic and acrylic.

Examples of the monomer component constituting the acrylic resin include (meth) acrylic acid, and (meth) acrylic acid derivatives such as (meth) acrylic acid ester (alkyl ester, aryl ester, aralkyl ester, etc.), (meth) acrylamide, and (meth) acrylamide derivative.

In addition, as the monomer component constituting the acrylic resin, aromatic vinyl compounds such as styrene, α-methylstyrene, vinyltoluene, vinylnaphthalene, divinylbenzene, trivinylbenzene, divinylnaphthalene, and the like may be used, together with (meth) acrylic acid or (meth) acrylic acid derivative.

The acrylic resin may be a resin composed of only a (meth) acrylic component or a resin also having a component other than the (meth) acrylic component. Further, the acrylic resin may have a hydroxyl group, a carboxyl group, a silanol group, or the like.

As the resin component, for example, a product of Maruzen Petrochemical Co., Ltd., Sumitomo Bakelite Co., Ltd., Yasuhara Chemical Co., Ltd., Toso Co., Ltd., Rutgers Chemicals Co., Ltd., BASF Co., Ltd., Arizona Chemical Co., Ltd., Nitto Chemical Co., Ltd., Co., Ltd., Nippon Catalyst Co., Ltd., JX Energy Co., Ltd., Arakawa Chemical Industry Co., Ltd., Taoka Chemical Industry Co., Ltd. can be used.

(d) Anti-aging agent

The rubber composition preferably contains an anti-aging agent. Content of the anti-aging agent is, for example, more than 1 part by mass and less than 10 parts by mass, and more preferably 3 parts by mass or more, with respect to 100 parts by mass of the rubber component.

Examples of the antiaging agent include naphthylamine-based antiaging agents such as phenyl-α-naphthylamine; diphenylamine-based antiaging agents such as octylated diphenylamine and 4,4'-bis (α, α'-dimethylbenzyl) diphenylamine; p-phenylenediamine-based anti-aging agent such as N-isopropyl-N'-phenyl-p-phenylenediamine, N-(1,3-dimethylbutyl)-N'-phenyl-p-phenylenediamine, and N,N'-di-2-naphthyl-p-phenylenediamine; quinoline-based anti-aging agent such as a polymer of 2,2,4-trimethyl-1,2-dihydroquinolin; monophenolic anti-aging agents such as 2,6-di-t-butyl-4-methylphenol, styrenated phenol; bis, tris, polyphenolic anti-aging agents such as tetrakis-[methylene-3- (3',5'-di-t-butyl-4'-hydroxyphenyl)propionate] methane. These may be used alone or in combination of two or more.

As the anti-aging agent, for example, products of Seiko Chemical Co., Ltd., Sumitomo Chemical Co., Ltd., Ouchi Shinko Chemical Industry Co., Ltd., Flexsys Co., Ltd., etc. can be used.

(e) Stearic acid

The rubber composition may contain stearic acid. Content of stearic acid is, for example, more than 0.5 parts by mass and less than 10.0 parts by mass, and more preferably 3 parts by mass or more, with respect to 100 parts by mass of the rubber component. As the stearic acid, conventionally known ones can be used, and, for example, products of NOF Corporation, NOF Corporation, Kao Corporation, Fuji film Wako Pure Chemical Industries, Ltd., and Chiba Fatty Acid Co., Ltd., etc. can be used.

(f) Zinc oxide

The rubber composition may contain zinc oxide. Content of zinc oxide is, for example, more than 0.5 parts by mass and less than 10 parts by mass, and more preferably 3 parts by mass or more, with respect to 100 parts by mass of the rubber component. As the zinc oxide, conventionally known ones can be used, for example, products of Mitsui Metal Mining Co., Ltd., Toho Zinc Co., Ltd., Hakusui Tech Co., Ltd., Shodo Chemical Industry Co., Ltd., Sakai Chemical Industry Co., Ltd., etc. can be used.

(g) Wax

The rubber composition preferably contains wax. Content of the wax is, for example, 0.5 to 20 parts by mass, preferably 1.0 to 15 parts by mass, and more preferably 1.5 to 10.0 parts by mass with respect to 100 parts by mass of the rubber component.

The wax is not particularly limited, and examples thereof include petroleum waxes such as paraffin wax and microcrystalline wax; natural waxes such as plant wax and animal wax; and synthetic waxes such as a polymer of ethylene or propylene. These may be used alone or in combination of two or more.

As the wax, for example, products of Ouchi Shinko Chemical Industry Co., Ltd., Nippon Seiro Co., Ltd., and Seiko Kagaku Co., Ltd. can be used.

(h) Crosslinking agent and vulcanization accelerator

The rubber composition preferably contains a cross-linking agent such as sulfur. Content of the cross-linking agent is, for example, more than 0.1 part by mass and less than 10.0 parts by mass, and more preferably 1.5 parts by mass or more, with respect to 100 parts by mass of the rubber component.

Examples of sulfur include powdered sulfur, precipitated sulfur, colloidal sulfur, insoluble sulfur, highly dispersible sulfur, and soluble sulfur, which are commonly used in the rubber industry. These may be used alone or in combination of two or more.

As the sulfur, for example, products of Tsurumi Chemical Industry Co., Ltd., Karuizawa Sulfur Co., Ltd., Shikoku Chemicals Corporation, Flexsys Co., Ltd., Nippon Kanryu Kogyo Co., Ltd., Hosoi Chemical Industry Co., Ltd., etc. can be used.

Examples of the cross-linking agent other than sulfur include vulcanizing agents containing a sulfur atom such as Tackirol V200 manufactured by Taoka Chemical Industry Co., Ltd., DURALINK HTS (1,6-hexametdihylene-sodium dithiosulfate dihydrate) manufactured by Flexsys, and KA9188 (1,6-bis (N, N'-dibenzylthiocarbamoyldithio) hexane) manufactured by Lanxess; and organic peroxides such as dicumylperoxide.

The rubber composition preferably contains a vulcanization accelerator. Content of the vulcanization accelerator

is, for example, more than 0.3 parts by mass and less than 10.0 parts by mass, and more preferably 3 parts by mass or more, with respect to 100 parts by mass of the rubber component.

Examples of the vulcanization accelerator include

thiazole-based vulcanization accelerators such as 2-mercaptobenzothiazole, di-2-benzothiazolyl disulfide, and N-cyclohexyl-2-benzothiadylsulfenamide;
thiuram-based vulcanization accelerators such as tetramethylthiuram disulfide (TMTD), tetrabenzyltiuram disulfide (TBzTD), and tetrakis (2-ethylhexyl) thiuram disulfide (TOT-N);
sulfenamide-based vulcanization accelerators such as N-cyclohexyl-2-benzothiazolesulfenamide, N-t-butyl- 2-benzothiazolyl sulfenamide, N-oxyethylene-2-benzothiazolesulfenamide, N-oxyethylene-2-benzothiazolesulfenamide, and N, N'-diisopropyl-2-benzothiazolesulfenamide; and guanidine-based vulcanization accelerators such as diphenylguanidine, di-ortho-tolylguanidine and ortho-tolylbiguanidine. These may be used alone or in combination of two or more.

(i) Other

In addition to the above components, the rubber composition may further contain additives generally used in the tire industry, such as fatty acid metal salts, carboxylic acid metal salts, and organic peroxides. Content of these additives is, for example, more than 0.1 part by mass and less than 200 parts by mass with respect to 100 parts by mass of the rubber component.

2. Production of tread rubber composition

The rubber composition is produced by a general method, for example, a manufacturing method including a base kneading step of kneading a rubber component with a filler such as silica or carbon black, and a finish kneading step of kneading the kneaded product obtained in the base kneading step and a cross-linking agent.

The kneading can be performed using a known (sealed) kneader such as a banbury mixer, a kneader, or an open roll.

The kneading temperature of the base kneading step is, for example, higher than 50 °C and lower than 200 °C, and the kneading time is, for example, more than 30 seconds and less than 30 minutes. In the base kneading process, in addition to the above components, compounding agents conventionally used in the rubber industry, such as softeners such as oil, stearic acid, zinc oxide, antiaging agents, waxes, and vulcanization accelerators, may be appropriately added and kneaded as needed.

In the finish kneading step, the kneaded product obtained in the base kneading step and the cross-linking agent are kneaded. The kneading temperature of the finish kneading step is, for example, above room temperature and lower than 80 °C, and the kneading time is, for example, more than 1 minute and less than 15 minutes. In the finish kneading step, in addition to the above components, a vulcanization accelerator, zinc oxide and the like may be appropriately added and kneaded as needed.

3. Tire manufacturing

The tire of the present disclosure is manufactured by a usual method using an unvulcanized rubber composition obtained through the finish kneading step. That is, the unvulcanized rubber composition is extruded according to the shape of tread, and is molded together with other tire members by a normal method on a tire molding machine to produce an unvulcanized tire.

Specifically, on the molded drum, the inner liner as a member to ensure the air-tightness of the tire, the carcass as a member to withstand the load, impact and filling air pressure received by the tire, a belt as a member to strongly tighten the carcass to increase the rigidity of the tread, and the like are wound, both ends of the carcass are fixed to both side edges, a bead part as a member for fixing the tire to the rim is arranged, and they are formed into a toroid shape. Then the tread is pasted on the center of the outer circumference, and the sidewall portion as a member that protects the carcass and resists bending is pasted on the radial outer side to produce an unvulcanized tire.

In the present embodiment, it is preferable to provide with an inclined belt layer that extends at an angle of 15° to 30° with respect to the tire circumferential direction, as the belt. As a result, the durability of the tire is ensured while the rigidity of the tread can be sufficiently maintained. Further, since it can be restrained in the circumferential direction, it becomes easy to suppress the growth of the outer diameter.

Then, the produced unvulcanized tire is heated and pressed in a vulcanizer to obtain a tire. The vulcanization step can be carried out by applying a known vulcanization means. The vulcanization temperature is, for example, higher than 120 °C and lower than 200 °C, and the vulcanization time is, for example, more than 5 minutes and less than 15

minutes.

At this time, the tire is formed into a shape that satisfies the above-mentioned (formula 1) and (formula 2), when the tire is installed on a standardized rim and the internal pressure is set to 250 kPa.

Specific tires that can satisfy the above (formula 1) and (formula 2) include tires with size notation of 145/60R18, 145/60R19, 155/55R18, 155/55R19, 155/70R17, 155/70R19, 165/55R20, 165/55R21, 165/60R19, 165/65R19, 165/70R18, 175/55R19, 175/55R20, 175/55R22, 175/60R18, 185/55R19, 185/60R20, 195/50R20, 195/55R20, etc.

In the present embodiment, the tires that can satisfy (formula 1) and (formula 2) are preferably applied to pneumatic tires for passenger cars, and satisfying the above formulas can contribute more favorably to solve the problem in the present disclosure of providing a pneumatic tire in which the rolling resistance at high-speed running is sufficiently reduced, and the

durability is sufficiently improved.

[EXAMPLES]

Hereinafter, the present disclosure will be described in more specific with reference to Examples.

[Experiment 1]

In this experiment, 175 size tires were prepared and evaluated.

1. Manufacture of rubber compositions for treads

First, a rubber composition for tread was produced.

(1) Compounding material

First, each compounding material shown below was prepared.

(a) Rubber component

(a-1) NR: TSR20
(a-2) SBR: Modified solution polymerization SBR produced according to the method described in the next paragraph. (Styrene content: 30% by mass, vinyl bond amount: 52% by mass, Mw: 250,000)
(a-3) BR: UBEPOL-BR150 manufactured by Ube Kosan Co., Ltd.

The abovementioned SBR was produced according to the procedure shown below. First, cyclohexane, tetrahydrofuran, styrene, and 1,3-butadiene were charged into a nitrogen-substituted autoclave reactor. After adjusting the temperature of the contents of the reactor to 20 °C, n-butyllithium was added to initiate polymerization. Polymerization was carried out under adiabatic conditions, and the maximum temperature reached 85 °C. When the polymerization conversion reaches 99%, 1,3-butadiene was added, and then further polymerization was carried out for 5 minutes. Thereafter, N, N-bis (trimethylsilyl) -3-aminopropyltriethoxysilane was added as a modifying agent to carry out the reaction. After completion of the polymerization reaction, 2,6-di-tert-butyl-p-cresol was added. Then, the solvent was removed by steam stripping and dried by a heat roll adjusted to 110 °C to obtain the SBR.

(b) Compounding materials other than rubber components

(b-1) Carbon black: Diablack N220 manufactured by Mitsubishi Chemical Corporation
(b-2) Silica: Ultrasil VN3 manufactured by Evonik Co., Ltd. (BET specific surface area: 165 $m^2/g$)
(b-3) Silane coupling agent: Si266 manufactured by Degussa Co., Ltd. (Bis (3-triethoxysilylpropyl) disulfide)
(b-4) Oil: Process X-140 manufactured by Japan Energy Co., Ltd.
(b-5) Resin (polymer component): SA85 manufactured by Arizona Chemical Co. (a-methylstyrene resin)
(b-6) Wax: Ozoace 0355 manufactured by Nippon Seiro Co., Ltd.
(b-7) Anti-aging agent-1: Nocrac 6C manufactured by Ouchi Shinko Chemical Industry Co., Ltd. (N -phenyl-N'-(1,3-dimethylbutyl)-p-phenylenediamine)
(b-8) Anti-aging agent-2: Nocrac 224 manufactured by Ouchi Shinko Chemical Industry Co., Ltd. (2,2,4-trimethyl-1,2-dihydroquinoline polymer)
(b-9) Zinc oxide: Zinc white No. 1 manufactured by Mitsui Mining & Smelting Co., Ltd.
(b-10) Stearic acid: Stearic acid "TSUBAKI" manufactured by NOF CORPORATION
(b-11) Crosslinking agent and vulcanization accelerator

Sulfur: Powdered sulfur manufactured by Tsurumi Chemical Industry Co., Ltd.
Vulcanization accelerator-1: Nocceler CZ-G (CBS) manufactured by Ouchi Shinko Chemical Industry Co., Ltd. (N-Cyclohexyl-2-benzothiazolylsulphenamide)
Vulcanization accelerator-2: Nocceler D (DPG) manufactured by Ouchi Shinko Chemical Industry Co., Ltd. (1,3-Diphenylguanidine)

(2) Production of rubber composition

In accordance with the formulation shown in Table 1 and Table 2, materials other than sulfur and the vulcanization accelerator were kneaded under the conditions of 150 °C for 5 minutes using a banbury mixer to obtain a kneaded product. Each compounding amount is a mass part.

2. Tire manufacturing

Next, sulfur and a vulcanization accelerator were added to the obtained kneaded product, and the mixture was kneaded at 80°C for 5 minutes using an open roll to obtain a tread rubber composition. A tread is formed using the obtained tread rubber composition, bonded together with other tire members to form an unvulcanized tire, which is then press-vulcanized for 10 minutes under the condition of 170 °C to produce each test tire having a size of 175 type (Example 1-1 to Example 1-5 and Comparative Example 1-1 to Comparative Example 1-7).
In each test tire, the above-mentioned ($L_{80}/L_0$) was 0.5, the total cross-sectional area of the circumferential groove was 22% of the cross-sectional area of the tread portion, and the total volume of the lateral grooves including the lateral grooves having the groove width/groove depth of 0. 65 was set to 3.5% of the volume of the tread portion.

3. Parameter calculation

After that, the outer diameter Dt (mm), the cross-sectional width Wt (mm), the cross-sectional height Ht (mm), and the aspect ratio (%) of each test tire were obtained, and the virtual volume V ($mm^3$) was obtained. At the same time, a rubber test piece for viscoelasticity measurement was produced by cutting out from the rubber layer of the tread portion of each test tire in a length 20 mm × width 4 mm × thickness 2 mm so that the tire circumferential direction was the long side. For each rubber test piece, tan $\delta$ (30°Ctan $\delta$) was measured under the conditions of 30°C, frequency 10 Hz, initial strain 5%, and dynamic strain 1% using an Eplexor series manufactured by GABO Co., Ltd. The results are shown in Tables 1 and 2.
Then, $(Dt-2 \times Ht)$, $(Dt^2 \times \pi/4) / Wt$, $(V+1.5\times 10^7)/Wt$, $(V+2.0 \times 10^7) / Wt$, $(V+2.5\times10^7)/Wt$, and 30°Ctan $\delta \times Wt$ were determined. The results are shown in Tables 1 and 2.

5. Performance evaluation test

(1) Evaluation of rolling resistance at high-speed running

Each test tire was installed on all wheels of the vehicle (domestic FF vehicle, displacement 2000cc), filled with air so that the internal pressure became 250kPa, and then driven on the test course on the dry road surface at a speed of 100km/h. After making a 10km lap, the accelerator was released, and the distance from when the accelerator was turned off until the vehicle stopped was measured as the rolling resistance at high-speed running.
Next, the result in Comparative Example 1-7 was set to as 100, and the results were indexed based on the following formula to relatively evaluate the rolling resistance at high-speed running. The larger the value, the longer the distance from when the accelerator is turned off until the vehicle stops and the smaller the rolling resistance in the steady state, and showing excellent fuel efficiency.

$$\text{Rolling resistance} = [(\text{Result of test tire}) / (\text{Result of Comparative Example 1-7})] \times 100$$

(2) Evaluation of durability performance

After installing each test tire on all wheels of the vehicle (domestic FF vehicle, displacement 2000cc) and filling it with air so that the internal pressure becomes 250kPa, a driving 10 laps at a speed of 50 km/h, followed by climbing onto the unevenness provided on the road surface at a speed of 80 km/h was repeated on the test course on a dry road surface in an overloaded state. Thereafter, the lap was performed again at a speed of 50 km/h and then the speed was gradually increased to measure the speed at the time when the driver felt an abnormality.

Next, the result in Comparative Example 1-7 was set to as 100, and the durability performance was relatively evaluated by indexing based on the following formula. The larger the value, the better the durability.

$$\text{Durability} = [(\text{Result of test tire}) / (\text{Result of Comparative Example 1-7})] \times 100$$

(3) Comprehensive evaluation

The evaluation results of (1) and (2) above were totaled to obtain a comprehensive evaluation.

(4) Evaluation result

The results of each evaluation are shown in Tables 1 and 2.

[Table 1]

| | Example No. | | | | |
|---|---|---|---|---|---|
| | 1-1 | 1-2 | 1-3 | 1-4 | 1-5 |
| SIZE | 175/40R21 | 175/40R21 | 175/40R21 | 175/50R20 | 175/60R19 |
| (Formulation) | | | | | |
| NR | 40 | 30 | 70 | 40 | 40 |
| SBR | 50 | 70 | 20 | 50 | 50 |
| BR | 10 | | 10 | 10 | 10 |
| Carbon | 15 | 15 | 15 | 15 | 15 |
| Silica | 45 | 45 | 45 | 45 | 45 |
| Silane coupling agent | 4.5 | 4.5 | 4.5 | 4.5 | 4.5 |
| Oil | 10 | 10 | 10 | 10 | 10 |
| Resin | 3 | 3 | 3 | 3 | 3 |
| Wax | 1.5 | 1.5 | 1.5 | 1.5 | 1.5 |
| Anti-aging agent-1 | 2 | 2 | 2 | 2 | 2 |
| Anti-aging agent-2 | 1 | 1 | 1 | 1 | 1 |
| Zinc oxide | 3 | 3 | 3 | 3 | 3 |
| Stearic acid | 3 | 3 | 3 | 3 | 3 |
| Sulfur | 1.5 | 1.5 | 1.5 | 1.5 | 1.5 |
| Vulcanization accelerator-1 | 2 | 2 | 2 | 2 | 2 |
| Vulcanization accelerator-2 | 1 | 1 | 1 | 1 | 1 |

(continued)

| (Parameter) | | | | | |
|---|---|---|---|---|---|
| 30°Ctanδ | 0.14 | 0.12 | 0.10 | 0.14 | 0.14 |
| Dt(mm) | 672 | 673 | 674 | 684 | 693 |
| V($mm^3$) | 23093883 | 23412074 | 23599328 | 30152956 | 34384955 |
| Wt(mm) | 176 | 177 | 177 | 183 | 177 |
| Ht(mm) | 69 | 70 | 70 | 88 | 105 |
| Dt-2×Ht(mm) | 533 | 533 | 533 | 508 | 483 |
| ($Dt^2 \times \pi/4$)/Wt | 2015 | 2010 | 2016 | 2008 | 2131 |
| (V+1.5×$10^7$)/Wt | 215940 | 217352 | 217572 | 246737 | 278708 |
| (V+2.0×$10^7$)/Wt | 244349 | 245601 | 245821 | 274060 | 306956 |
| (V+2.5×$10^7$)/Wt | 272758 | 273850 | 274069 | 301382 | 335205 |
| Aspect ratio (%) | 39.20 | 39.55 | 39.55 | 48.09 | 59.32 |
| 30°Ctanδ×W t | 24.64 | 21.24 | 17.70 | 25.62 | 24.78 |
| (Evaluation result) | | | | | |
| Rolling resistance at high-speed running | 110 | 116 | 122 | 110 | 118 |
| Durability | 114 | 120 | 126 | 112 | 108 |
| Comprehensive evaluation | 224 | 236 | 248 | 222 | 226 |

[Table 2]

| | Comparative example No. | | | | | | |
|---|---|---|---|---|---|---|---|
| | 1-1 | 1-2 | 1-3 | 1-4 | 1-5 | 1-6 | 1-7 |
| SIZE | 175/80R14 | 175/60R19 | 175/60R19 | 175/60R19 | 175/80R14 | 175/80R14 | 175/80R14 |
| (Formulation) | | | | | | | |
| NR | 40 | 40 | | 100 | 40 | 30 | 70 |
| SBR | 50 | 50 | 100 | | 50 | 70 | 20 |
| BR | 10 | 10 | 10 | 10 | 10 | | 10 |
| Carbon | 15 | 15 | 15 | 15 | 15 | 15 | 15 |
| Silica | 56 | 56 | 56 | 56 | 45 | 45 | 45 |
| Silane coupling agent | 5.6 | 5.6 | 5.6 | 5.6 | 4.5 | 4.5 | 4.5 |
| Oil | 15 | 15 | 15 | 15 | 10 | 10 | 10 |
| Resin | 3 | 3 | 3 | 3 | 3 | 3 | 3 |
| Wax | 1.5 | 1.5 | 1.5 | 1.5 | 1.5 | 1.5 | 1.5 |
| Anti-aging agent 1 | 2 | 2 | 2 | 2 | 2 | 2 | 2 |
| Anti-aging agent-2 | 1 | 1 | 1 | 1 | 1 | 1 | 1 |
| Zinc oxide | 3 | 3 | 3 | 3 | 3 | 3 | 3 |
| Stearic acid | 3 | 3 | 3 | 3 | 3 | 3 | 3 |
| Sulfur | 1.5 | 1.5 | 1.5 | 1.5 | 1.5 | 1.5 | 1.5 |
| Vulcanization accelerator-1 | 2 | 2 | 2 | 2 | 2 | 2 | 2 |
| Vulcanization accelerator-2 | 1 | 1 | 1 | 1 | 1 | 1 | 1 |
| (Parameter) | | | | | | | |
| 30°Ctanδ | 0.17 | 0.17 | 0.19 | 0.14 | 0.14 | 0.12 | 0.1 |
| Dt(mm) | 636 | 692 | 693 | 694 | 636 | 635 | 637 |
| V($mm^3$) | 38394786 | 34466507 | 34331262 | 34854035 | 38612938 | 38099665 | 38669035 |
| Wt(mm) | 176 | 178 | 177 | 178 | 177 | 175 | 176 |
| Ht(mm) | 140 | 105 | 105 | 106 | 140 | 140 | 141 |

(continued)

| (Parameter) | | | | | | | |
|---|---|---|---|---|---|---|---|
| $Dt-2\times Ht(mm)$ | 356 | 482 | 483 | 482 | 356 | 355 | 355 |
| $(Dt^2\times\pi/4)/Wt$ | 1805 | 2113 | 2131 | 2125 | 1795 | 1810 | 1811 |
| $(V+1.5\times10^7)/Wt$ | 303379 | 277902 | 278708 | 280079 | 302898 | 303427 | 304938 |
| $(V+2.0\times10^7)/Wt$ | 331789 | 305992 | 306956 | 308169 | 331147 | 331998 | 333347 |
| $(V+2.5\times10^7)/Wt$ | 360198 | 334082 | 335205 | 336259 | 359395 | 360570 | 361756 |
| Aspect ratio (%) | 79.55 | 58.99 | 59.32 | 59.55 | 79.10 | 80.00 | 80.11 |
| $30°C\tan\delta\times W\ t$ | 29.92 | 30.26 | 33.63 | 24.92 | 24.78 | 21.00 | 17.60 |
| (Evaluation result) | | | | | | | |
| Rolling resistance at high-speed running | 88 | 90 | 85 | 92 | 92 | 96 | 100 |
| Durability | 90 | 92 | 88 | 94 | 90 | 94 | 100 |
| Comprehensive evaluation | 178 | 182 | 173 | 186 | 182 | 190 | 200 |

[Experiment 2]

In this experiment, 195 size tires were prepared and evaluated.

After producing the test tires of Examples 2-1 to 2-5 and Comparative Examples 2-1 to 2-7 shown in Tables 3 and 4 in the same manner as in Experiment 1, each parameter was calculated by performing the same procedure. Then, in the same manner, a performance evaluation test was conducted and evaluated. In this experiment, the result in Comparative Example 2-7 was set as 100 for evaluation. The results of each evaluation are shown in Tables 3 and 4.

[Table 3]

| | Example No. | | | | |
|---|---|---|---|---|---|
| | 2-1 | 2-2 | 2-3 | 2-4 | 2-5 |
| SIZE | 195/40R20 | 195/40R20 | 195/40R20 | 195/50R19 | 195/60R18 |
| (Formulation) | | | | | |
| NR | 40 | 30 | 70 | 40 | 40 |
| SBR | 50 | 70 | 20 | 50 | 50 |
| BR | 10 | | 10 | 10 | 10 |
| Carbon | 15 | 15 | 15 | 15 | 15 |
| Silica | 45 | 45 | 45 | 45 | 45 |
| Silane coupling agent | 4.5 | 4.5 | 4.5 | 4.5 | 4.5 |
| Oil | 10 | 10 | 10 | 10 | 10 |
| Resin | 3 | 3 | 3 | 3 | 3 |
| Wax | 1.5 | 1.5 | 1.5 | 1.5 | 1.5 |
| Anti-aging agent-1 | 2 | 2 | 2 | 2 | 2 |
| Anti-aging agent-2 | 1 | 1 | 1 | 1 | 1 |
| Zinc oxide | 3 | 3 | 3 | 3 | 3 |
| Stearic acid | 3 | 3 | 3 | 3 | 3 |
| Sulfur | 1.5 | 1.5 | 1.5 | 1.5 | 1.5 |
| Vulcanization accelerator-1 | 2 | 2 | 2 | 2 | 2 |
| Vulcanization accelerator-2 | 1 | 1 | 1 | 1 | 1 |
| (Parameter) | | | | | |
| 30°Ctan$\delta$ | 0.14 | 0.12 | 0.10 | 0.14 | 0.14 |
| Dt(mm) | 665 | 663 | 664 | 680 | 691 |
| V($mm^3$) | 29087378 | 28526824 | 28431992 | 35417448 | 42618582 |
| Wt(mm) | 200 | 199 | 198 | 196 | 202 |
| Ht(mm) | 79 | 78 | 78 | 99 | 117 |
| Dt-2$\times$Ht(mm) | 507 | 507 | 508 | 482 | 457 |
| ($Dt^2 \times \pi/4$)/Wt | 1737 | 1735 | 1749 | 1853 | 1856 |
| (V+1.5$\times 10^7$)/Wt | 220437 | 218728 | 219353 | 257232 | 285241 |
| (V+2.0$\times 10^7$)/Wt | 245437 | 243853 | 244606 | 282742 | 309993 |
| (V+2.5$\times 10^7$)/Wt | 270437 | 268979 | 269859 | 308252 | 334745 |
| Aspect ratio (%) | 39.50 | 39.20 | 39.39 | 50.51 | 57.92 |
| 30°Ctan$\delta \times$W t | 28.00 | 23.88 | 19.80 | 27.44 | 28.28 |

(continued)

| (Evaluation result) | | | | | |
|---|---|---|---|---|---|
| Rolling resistance at high-speed running | 107 | 113 | 121 | 109 | 117 |
| Durability | 113 | 115 | 123 | 111 | 103 |
| Comprehensive evaluation | 220 | 228 | 244 | 220 | 220 |

[Table 4]

| | Comparative example No. | | | | | | |
|---|---|---|---|---|---|---|---|
| | 2-1 | 2-2 | 2-3 | 2-4 | 2-5 | 2-6 | 2-7 |
| SIZE | 195/65R17 | 195/40R20 | 195/40R20 | 195/40R20 | 195/65R17 | 195/65R17 | 195/65R17 |
| (Formulation) | | | | | | | |
| NR | 40 | 40 | | 100 | 40 | 30 | 70 |
| SBR | 50 | 50 | 100 | | 50 | 70 | 20 |
| BR | 10 | 10 | 10 | 10 | 10 | | 10 |
| Carbon | 15 | 15 | 15 | 15 | 15 | 15 | 15 |
| Silica | 56 | 56 | 56 | 56 | 45 | 45 | 45 |
| Silane coupling agent | 5.6 | 5.6 | 5.6 | 5.6 | 4.5 | 4.5 | 4.5 |
| Oil | 15 | 15 | 15 | 15 | 10 | 10 | 10 |
| Resin | 3 | 3 | 3 | 3 | 3 | 3 | 3 |
| Wax | 1.5 | 1.5 | 1.5 | 1.5 | 1.5 | 1.5 | 1.5 |
| Anti-aging agent-1 | 2 | 2 | 2 | 2 | 2 | 2 | 2 |
| Anti-aging agent-2 | 1 | 1 | 1 | 1 | 1 | 1 | 1 |
| Zinc oxide | 3 | 3 | 3 | 3 | 3 | 3 | 3 |
| Stearic acid | 3 | 3 | 3 | 3 | 3 | 3 | 3 |
| Sulfur | 1.5 | 1.5 | 1.5 | 1.5 | 1.5 | 1.5 | 1.5 |
| Vulcanization accelerator-1 | 2 | 2 | 2 | 2 | 2 | 2 | 2 |
| Vulcanization accelerator-2 | 1 | 1 | 1 | 1 | 1 | 1 | 1 |
| (Parameter) | | | | | | | |
| 30°Ctanδ | 0.17 | 0.17 | 0.19 | 0.14 | 0.14 | 0.12 | 0.1 |
| Dt(mm) | 686 | 664 | 664 | 664 | 686 | 686 | 686 |
| V($mm^3$) | 44829249 | 28719183 | 28431992 | 28575587 | 43937124 | 43714093 | 43937124 |
| Wt(mm) | 201 | 200 | 198 | 199 | 197 | 196 | 197 |
| Ht(mm) | 127 | 78 | 78 | 78 | 127 | 127 | 127 |

(continued)

| (Parameter) | | | | | | | |
|---|---|---|---|---|---|---|---|
| Dt-2×Ht(mm) | 432 | 508 | 508 | 508 | 432 | 432 | 432 |
| $(Dt^2 \times \pi/4)/Wt$ | 1839 | 1731 | 1749 | 1740 | 1876 | 1886 | 1876 |
| $(V+1.5\times10^7)/Wt$ | 297658 | 218596 | 219353 | 218973 | 299173 | 299562 | 299173 |
| $(V+2.0\times10^7)/Wt$ | 322534 | 243596 | 244606 | 244098 | 324554 | 325072 | 324554 |
| $(V+2.5\times10^7)/Wt$ | 347409 | 268596 | 269859 | 269224 | 349935 | 350582 | 349935 |
| Aspect ratio (%) | 63.18 | 39.00 | 39.39 | 39.20 | 64.47 | 64.80 | 64.47 |
| 30°Ctanδ×W t | 34.17 | 34.00 | 37.62 | 27.86 | 27.58 | 23.52 | 19.70 |
| (Evaluation result) | | | | | | | |
| Rolling resistance at high-speed running | 90 | 92 | 84 | 90 | 90 | 94 | 100 |
| Durability | 88 | 90 | 86 | 92 | 88 | 92 | 100 |
| Comprehensive evaluation | 178 | 182 | 170 | 182 | 178 | 186 | 200 |

[Experiment 3]

In this experiment, 225 size tires were prepared and evaluated.

After producing the test tires of Examples 3-1 to 3-5 and Comparative Examples 3-1 to 3-7 shown in Tables 5 and 6 in the same manner as in Experiment 1, each parameter was calculated by performing the same procedure. Then, in the same manner, a performance evaluation test was conducted and evaluated. In this experiment, the result in Comparative Example 3-7 was set as 100 for evaluation. The results of each evaluation are shown in Tables 5 and 6.

[Table 5]

| | Example No. | | | | |
|---|---|---|---|---|---|
| | 3-1 | 3-2 | 3-3 | 3-4 | 3-5 |
| SIZE | 195/40R20 | 195/40R20 | 195/40R20 | 195/50R19 | 195/60R18 |
| (Formulation) | | | | | |
| NR | 40 | 30 | 70 | 40 | 40 |
| SBR | 50 | 70 | 20 | 50 | 50 |
| BR | 10 | | 10 | 10 | 10 |
| Carbon | 15 | 15 | 15 | 15 | 15 |
| Silica | 45 | 45 | 45 | 45 | 45 |
| Silane coupling agent | 4.5 | 4.5 | 4.5 | 4.5 | 4.5 |
| Oil | 10 | 10 | 10 | 10 | 10 |
| Resin | 3 | 3 | 3 | 3 | 3 |
| Wax | 1.5 | 1.5 | 1.5 | 1.5 | 1.5 |
| Anti-aging agent-1 | 2 | 2 | 2 | 2 | 2 |
| Anti-aging agent-2 | 1 | 1 | 1 | 1 | 1 |
| Zinc oxide | 3 | 3 | 3 | 3 | 3 |
| Stearic acid | 3 | 3 | 3 | 3 | 3 |
| Sulfur | 1.5 | 1.5 | 1.5 | 1.5 | 1.5 |
| Vulcanization accelerator-1 | 2 | 2 | 2 | 2 | 2 |
| Vulcanization accelerator-2 | 1 | 1 | 1 | 1 | 1 |
| (Parameter) | | | | | |
| 30°Ctan$\delta$ | 0.14 | 0.12 | 0.10 | 0.14 | 0.14 |
| Dt(mm) | 716 | 718 | 717 | 734 | 713 |
| V($mm^3$) | 36203610 | 37040131 | 35785417 | 50043281 | 40161995 |
| Wt(mm) | 229 | 231 | 226 | 227 | 228 |
| Ht(mm) | 79 | 80 | 79 | 113 | 90 |
| Dt-2$\times$Ht(mm) | 558 | 558 | 559 | 508 | 533 |
| ($Dt^2 \times n/4$)/Wt | 1758 | 1753 | 1787 | 1864 | 1751 |
| (V+1.5$\times 10^7$)/Wt | 223597 | 225282 | 224714 | 286534 | 241939 |
| (V+2.0$\times 10^7$)/Wt | 245431 | 246927 | 246838 | 308561 | 263868 |
| (V+2.5$\times 10^7$)/Wt | 267265 | 268572 | 268962 | 330587 | 285798 |
| Aspect ratio (%) | 34.50 | 34.63 | 34.96 | 49.78 | 39.47 |
| 30°Ctan$\delta \times$W t | 32.06 | 27.72 | 22.6 | 31.78 | 31.92 |

(continued)

| (Evaluation result) | | | | | |
|---|---|---|---|---|---|
| Rolling resistance at high-speed running | 109 | 115 | 121 | 113 | 117 |
| Durability | 111 | 121 | 121 | 109 | 105 |
| Comprehensive evaluation | 220 | 236 | 242 | 222 | 222 |

[Table 6]

| | Comparative example No. | | | | | | |
|---|---|---|---|---|---|---|---|
| | 3-1 | 3-2 | 3-3 | 3-4 | 3-5 | 3-6 | 3-7 |
| SIZE | 225/60R20 | 225/50R20 | 225/50R20 | 225/50R20 | 225/60R20 | 225/60R20 | 225/60R20 |
| (Formulation) | | | | | | | |
| NR | 40 | 40 | | 100 | 40 | 30 | 70 |
| SBR | 50 | 50 | 100 | | 50 | 70 | 20 |
| BR | 10 | 10 | 10 | 10 | 10 | | 10 |
| Carbon | 15 | 15 | 15 | 15 | 15 | 15 | 15 |
| Silica | 56 | 56 | 56 | 56 | 45 | 45 | 45 |
| Silane coupling agent | 5.6 | 5.6 | 5.6 | 5.6 | 4.5 | 4.5 | 4.5 |
| Oil | 15 | 15 | 15 | 15 | 10 | 10 | 10 |
| Resin | 3 | 3 | 3 | 3 | 3 | 3 | 3 |
| Wax | 1.5 | 1.5 | 1.5 | 1.5 | 1.5 | 1.5 | 1.5 |
| Anti-aging agent-1 | 2 | 2 | 2 | 2 | 2 | 2 | 2 |
| Anti-aging agent-2 | 1 | 1 | 1 | 1 | 1 | 1 | 1 |
| Zinc oxide | 3 | 3 | 3 | 3 | 3 | 3 | 3 |
| Stearic acid | 3 | 3 | 3 | 3 | 3 | 3 | 3 |
| Sulfur | 1.5 | 1.5 | 1.5 | 1.5 | 1.5 | 1.5 | 1.5 |
| Vulcanization accelerator-1 | 2 | 2 | 2 | 2 | 2 | 2 | 2 |
| Vulcanization accelerator-2 | 1 | 1 | 1 | 1 | 1 | 1 | 1 |
| (Parameter) | | | | | | | |
| 30°Ctanδ | 0.17 | 0.17 | 0.19 | 0.14 | 0.14 | 0.12 | 0.10 |
| Dt(mm) | 778 | 736 | 732 | 735 | 777 | 776 | 778 |
| V($mm^3$) | 62176957 | 51904024 | 50611309 | 51191617 | 61898502 | 61350140 | 61631545 |
| Wt(mm) | 228 | 233 | 232 | 231 | 228 | 227 | 226 |
| Ht(mm) | 135 | 114 | 112 | 114 | 135 | 134 | 135 |

(continued)

| (Parameter) | | | | | | | |
|---|---|---|---|---|---|---|---|
| $Dt-2 \times Ht$(mm) | 508 | 508 | 508 | 508 | 508 | 508 | 508 |
| $(Dt^2 \times \pi/4)/Wt$ | 2085 | 1826 | 1814 | 1837 | 2080 | 2083 | 2103 |
| $(V+1.5 \times 10^7)/Wt$ | 338495 | 287142 | 282807 | 286544 | 337274 | 336344 | 339078 |
| $(V+2.0 \times 10^7)/Wt$ | 360425 | 308601 | 304359 | 308189 | 359204 | 358371 | 361202 |
| $(V+2.5 \times 10^7)/Wt$ | 382355 | 330060 | 325911 | 329834 | 381134 | 380397 | 383325 |
| Aspect ratio (%) | 59.21 | 48.93 | 48.28 | 49.13 | 58.99 | 59.03 | 59.73 |
| $30°C\tan\delta \times Wt$ | 38.76 | 39.61 | 44.08 | 32.34 | 31.92 | 27.24 | 22.60 |
| (Evaluation result) | | | | | | | |
| Rolling resistance at high-speed running | 88 | 92 | 94 | 94 | 90 | 98 | 100 |
| Durability | 92 | 88 | 90 | 90 | 92 | 96 | 100 |
| Comprehensive evaluation | 180 | 180 | 184 | 184 | 182 | 194 | 200 |

[Summary of Experiments 1 to 3]

From the results of Experiments 1 to 3 (Tables 1 to 6), for tires of any size, 175 size, 195 size, 225 size, it turns out that it is possible to provide a pneumatic tire in which the rolling resistance at high-speed running is sufficiently reduced and the durability is sufficiently improved, when the above (formula 1) and (formula 2) are satisfied.

Then, it turns out that, by satisfying each of the requirements specified in claim 2 and thereafter, it is possible to provide a tire with further improved rolling resistance and durability at high-speed running.

On the other hand, when either (formula 1) or (formula 2) is not satisfied, the rolling resistance at high-speed running cannot be sufficiently reduced, and the durability cannot be sufficiently improved.

[Experiment 4]

Next, three types of tires (Examples 4-1 to 4-3) in which the relationship between the virtual volume V and the cross-sectional width Wt did not differ significantly were produced with the same formulation and evaluated in the same manner. Here, the result of the tire of Example 4-3 was set to 100. The results of each evaluation are shown in Table 7.

[Table 7]

| | Example No. | | |
|---|---|---|---|
| | 4-1 | 4-2 | 4-3 |
| SIZE | 175/55R18 | 195/50R19 | 225/45R20 |
| (Formulation) | | | |
| NR | 30 | 30 | 30 |
| SBR | 70 | 70 | 70 |
| Carbon | 15 | 15 | 15 |
| Silica | 45 | 45 | 45 |
| Silane coupling agent | 4.5 | 4.5 | 4.5 |
| Oil | 10 | 10 | 10 |
| Resin | 3 | 3 | 3 |
| Wax | 1.5 | 1.5 | 1.5 |
| Anti-aging agent-1 | 2 | 2 | 2 |
| Anti-aging agent-2 | 1 | 1 | 1 |
| Zinc oxide | 3 | 3 | 3 |
| Stearic acid | 3 | 3 | 3 |
| Sulfur | 1.5 | 1.5 | 1.5 |
| Vulcanization accelerator-1 | 2 | 2 | 2 |
| Vulcanization accelerator-2 | 1 | 1 | 1 |
| (Parameter) | | | |
| 30°Ctan$\delta$ | 0.12 | 0.12 | 0.12 |
| Dt(mm) | 649 | 679 | 710 |
| V($mm^3$) | 30354118 | 35954077 | 43478150 |
| Wt(mm) | 182 | 201 | 225 |
| Ht(mm) | 96 | 98 | 101 |
| Dt-2×Ht(mm) | 457 | 483 | 508 |
| ($Dt^{2\times}\pi$/4)/Wt | 1818 | 1801 | 1760 |
| (V+1.5×$10^7$)/Wt | 249198 | 253503 | 259903 |

(continued)

| (Parameter) | | | |
|---|---|---|---|
| $(V+2.0\times10^7)/Wt$ | 276671 | 278378 | 282125 |
| $(V+2.5\times10^7)/Wt$ | 304144 | 303254 | 304347 |
| Aspect ratio (%) | 52.75 | 48.76 | 44.89 |
| $30°C\tan\delta\times Wt$ | 21.84 | 24.12 | 27.00 |
| (Evaluation result) | | | |
| Rolling resistance at high-speed running | 110 | 104 | 100 |
| Durability | 106 | 104 | 100 |
| Comprehensive evaluation | 216 | 208 | 200 |

Table 7 shows that, when there is no large difference in the relationship between the virtual volume V and the cross-sectional width Wt, the rolling resistance at high-speed running and durability are both improved, as the cross-sectional width Wt becomes smaller as from less than 205 mm to less than 200 mm, and as the aspect ratio increases. That is, it can be seen a remarkable effect is exhibited.

Although the present disclosure has been described above based on the embodiments, the present disclosure is not limited to the above embodiments. Various modifications can be made to the above embodiments within the same and equal range as the present disclosure.

The present disclosure (1) is;

a pneumatic tire having a tread portion, wherein
at least one of the rubber layers forming the tread portion contains a rubber component containing styrene-butadiene rubber and isoprene-based rubber, and is formed of a rubber composition having a loss tangent (30°Ctan δ ) of 0.14 or less measured under the conditions of 30°C, frequency 10 Hz, initial strain 5%, and dynamic strain rate 1%; and , when the cross-sectional width of the tire is Wt (mm), the outer diameter is Dt (mm), and the volume of the space occupied by the tire is the virtual volume V ($mm^3$), when the tire is installed on a standardized rim and the internal pressure is 250 kPa, the tire satisfies following (formula 1) and (formula 2):

$$1600 \leqq (Dt^2\times \pi/4)/Wt \leqq 2827.4 \cdots \text{(formula 1)}$$

$$[(V+1.5\times10^7)/Wt] \leqq 2.88\times10^5 \cdots \text{(formula 2)}$$

The present disclosure (2) is the pneumatic tire according to the present disclosure (1), wherein the following (formula 3) is satisfied.

$$[(V+2.0\times10^7)/Wt] \leqq 2.88\times10^5 \cdots \text{(formula 3)}$$

The present disclosure (3) is the pneumatic tire according to the present disclosure (2), wherein the following (formula 4) is satisfied.

$$[(V+2.5\times10^7)/Wt] \leqq 2.88\times10^5 \cdots \text{(formula 4)}$$

The present disclosure (4) is the pneumatic tire of any combination of the present disclosures (1) to (3), wherein, when the outer diameter of the tire is Dt (mm) and the cross-sectional height of the tire is Ht (mm) when the tire is installed on a standardized rim and the internal pressure is 250 kPa, (Dt-2 × Ht) is 470 (mm) or more.

The present disclosure (5) is the pneumatic tire of any combination of the present disclosures (1) to (4), which has an aspect ratio of 40% or more.

The present disclosure (6) is the pneumatic tire according to the present disclosure (5), which has an aspect ratio of 45% or more.

The present disclosure (7) is the pneumatic tire according to the present disclosure (6), which has an aspect ratio of 47.5% or more.

The present disclosure (8) is the pneumatic tire according to the present disclosure (7), which has an aspect ratio of 50% or more.

The present disclosure (9) is the pneumatic tire of any combination of the present disclosures (1) to (8), wherein the 30°Ctan δ is 0.12 or less.

The present disclosure (10) is the pneumatic tire according to the present disclosure (9), wherein the 30°Ctan δ is 0.10 or less

The present disclosure (11) is the pneumatic tire of any combination of the present disclosures (1) to (10), wherein 30°Ctan δ × Wt ≦ 30.0.

The present disclosure (12) is the pneumatic tire according to the present disclosure (11), wherein 30°Ctan δ × Wt ≦ 25.0.

The present disclosure (13) is the pneumatic tire of any combination of the present disclosures (1) to (12), wherein the tread portion has circumferential grooves continuously extending in the tire circumferential direction, and the ratio of the groove width $L_{80}$ at a depth of 80% of the maximum depth of the circumferential groove to the groove width $L_0$ of the circumferential groove on the ground contact surface of the tread portion ($L_{80}$ / $L_0$) is 0.3 to 0.7.

The present disclosure (14) is the pneumatic tire of any combination of the present disclosures (1) to (13), wherein the tread portion has a plurality of circumferential grooves continuously extending in the tire circumferential direction, and the total cross-sectional area of the plurality of circumferential grooves is 10 to 30% of the cross-sectional area of the tread portion.

The present disclosure (15) is the pneumatic tire of any combination of the present disclosures (1) to (14), wherein the tread portion has a plurality of lateral grooves extending in the tire axial direction, and the total volume of the plurality of lateral grooves is 2.0 to 5.0% of the volume of the tread portion

The present disclosure (16) is the pneumatic tire according to the present disclosure (15), wherein at least one of the lateral grooves is a lateral groove in which groove width / groove depth is 0.50 to 0. 80.

The present disclosure (17) is the pneumatic tire of any combination of the present disclosures (1) to (16), wherein Dt is less than 685 (mm), where Dt (mm) is the outer diameter of the tire when the tire is installed on a standardized rim and the internal pressure is 250 kPa.

The present disclosure (18) is the pneumatic tire of any combina tion of the present disclosures (1) to (17), wherein the cross-sectional wi dth Wt(mm) is less than 205 mm.

The present disclosure (19) is the pneumatic tire according to th e present disclosure (18), wherein the cross-sectional width Wt (mm) is 1 ess than 200 mm.

The present disclosure (20) is the pneumatic tire of any combina tion of the present disclosures (1) to (19), wherein the tread portion is f ormed from a plurality of rubber layers, and the rubber composition is u sed in the cap rubber layer of the tread.

The present disclosure (21) is the pneumatic tire of any combination of the present disclosures (1) to (20), which is a pneumatic tire for a passenger car.

## Claims

1. A pneumatic tire having a tread portion, wherein

   at least one of the rubber layers forming the tread portion contains a rubber component containing styrene-butadiene rubber and isoprene-based rubber, and is formed of a rubber composition having a loss tangent (30°Ctan δ ) of 0.14 or less measured under the conditions of 30°C, frequency 10 Hz, initial strain 5%, and dynamic strain rate 1%; and

   , when the cross-sectional width of the tire is Wt (mm), the outer diameter is Dt (mm), and the volume of the space occupied by the tire is the virtual volume V ($mm^3$), when the tire is installed on a standardized rim and the internal pressure is 250 kPa, the tire satisfies following (formula 1) and (formula 2):

$$1600 \leqq (Dt^2 \times \pi/4) / Wt \leqq 2827.4 \cdots \text{(formula 1)}$$

$$[(V + 1.5 \times 10^7) / Wt] \leqq 2.88 \times 10^5 \cdots \text{(formula 2)}$$

2. The pneumatic tire according to claim 1, wherein the tire satisfies the following (formula 3).

$$[(V + 2.0\times 10^7) / Wt] \leqq 2.88 \times 10^5 \cdots \text{(formula 3)}$$

**3.** The pneumatic tire according to claim 2, wherein the tire satisfies the following (formula 4).

$$[(V + 2.5\times 10^7) / Wt] \leqq 2.88 \times 10^5 \cdots \text{(formula 4)}$$

**4.** The pneumatic tire according to any one of claims 1 to 3, wherein
, when the outer diameter of the tire is Dt (mm) and the cross-sectional height of the tire is Ht (mm), when the tire is installed on a standardized rim and the internal pressure is 250 kPa, (Dt-2 × Ht) is 470 (mm) or more.

**5.** The pneumatic tire according to any one of claims 1 to 4, wherein the aspect ratio is 40% or more.

**6.** The pneumatic tire according to claim 5, wherein the aspect ratio is 45% or more.

**7.** The pneumatic tire according to claim 6, wherein the aspect ratio is 47.5% or more.

**8.** The pneumatic tire according to claim 7, wherein the aspect ratio is 50% or more.

**9.** The pneumatic tire according to any one of claims 1 to 8, wherein the 30°Ctan $\delta$ is 0.12 or less.

**10.** The pneumatic tire according to claim 9, wherein the 30°Ctan $\delta$ is 0.10 or less.

**11.** The pneumatic tire according to any one of claims 1 to 10, wherein 30°Ctan $\delta \times Wt \leqq 30.0$.

**12.** The pneumatic tire according to claim 11, wherein 30°Ctan $\delta \times Wt \leqq 25.0$.

**13.** The pneumatic tire according to any one of claims 1 to 12, wherein the tread portion has a plurality of circumferential grooves continuously extending in the tire circumferential direction, and the ratio of the groove width $L_{80}$ at a depth of 80% of the maximum depth of the circumferential groove to the groove width $L_0$ of the circumferential groove on the ground contact surface of the tread portion ($L_{80}$ / $L_0$) is 0.3 to 0.7.

**14.** The pneumatic tire according to any one of claims 1 to 13, wherein the tread portion has a plurality of circumferential grooves extending continuously in the tire circumferential direction, and the total cross-sectional area of the plurality of circumferential grooves is 10 to 30% of the cross-sectional area of the tread portion.

**15.** The pneumatic tire according to any one of claims 1 to 14, wherein the tread portion has a plurality of lateral grooves extending in the tire axial direction, and the total volume of the plurality of lateral grooves is 2.0 to 5.0% of the volume of the tread portion.

**16.** The pneumatic tire according to claim 15, wherein at least one of the lateral grooves is a lateral groove in which groove width / groove depth is 0.50 to 0. 80.

**17.** The pneumatic tire according to any one of claims 1 to 16, wherein
, when the outer diameter of the tire is Dt (mm) when the tire is installed on a standardized rim and the internal pressure is 250 kPa, the Dt is less than 685 (mm).

**18.** The pneumatic tire according to any one of claims 1 to 17, wherein the cross-sectional width Wt (mm) is less than 205 mm.

**19.** The pneumatic tire according to claim 18, wherein the cross-sectional width Wt (mm) is less than 200 mm.

**20.** The pneumatic tire according to any one of claims 1 to 19, wherein the tread portion is formed from a plurality of rubber layers, and the rubber composition is used in the cap rubber layer of the tread.

**21.** The pneumatic tire according to any one of claims 1 to 20, which is a pneumatic tire for a passenger car.

**INTERNATIONAL SEARCH REPORT**

International application No.
**PCT/JP2021/027579**

**A. CLASSIFICATION OF SUBJECT MATTER**

***B60C 1/00***(2006.01)i; ***B60C 3/04***(2006.01)i; ***B60C 11/00***(2006.01)i; ***B60C 11/13***(2006.01)i
FI: B60C1/00 A; B60C11/00 D; B60C11/13 B; B60C11/13 C; B60C3/04 B

According to International Patent Classification (IPC) or to both national classification and IPC

**B. FIELDS SEARCHED**

Minimum documentation searched (classification system followed by classification symbols)

B60C1/00; B60C3/04; B60C11/00; B60C11/13

Documentation searched other than minimum documentation to the extent that such documents are included in the fields searched

Published examined utility model applications of Japan 1922-1996
Published unexamined utility model applications of Japan 1971-2021
Registered utility model specifications of Japan 1996-2021
Published registered utility model applications of Japan 1994-2021

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP 2017-52330 A (BRIDGESTONE CORP.) 16 March 2017 (2017-03-16) entire text | 1-21 |
| A | JP 2017-52329 A (BRIDGESTONE CORP.) 16 March 2017 (2017-03-16) entire text | 1-21 |
| A | JP 2017-206194 A (BRIDGESTONE CORP.) 24 November 2017 (2017-11-24) entire text | 1-21 |
| A | JP 2016-94552 A (SUMITOMO RUBBER IND.) 26 May 2016 (2016-05-26) entire text | 1-21 |
| A | JP 2016-74408 A (BRIDGESTONE CORP.) 12 May 2016 (2016-05-12) entire text | 1-21 |
| A | JP 2017-52361 A (BRIDGESTONE CORP.) 16 March 2017 (2017-03-16) entire text | 1-21 |
| A | CN 109627509 A (GUIZHOU TYRE CO., LTD.) 16 April 2019 (2019-04-16) entire text | 1-21 |

☑ Further documents are listed in the continuation of Box C. ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **29 September 2021** | **12 October 2021** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (January 2015)

**INTERNATIONAL SEARCH REPORT**

International application No.
**PCT/JP2021/027579**

**C. DOCUMENTS CONSIDERED TO BE RELEVANT**

| Category* | Citation of document, with indication, where appropriate, of the relevant passages | Relevant to claim No. |
|---|---|---|
| A | US 2008/0264543 A1 (MONTANARO et al.) 30 October 2008 (2008-10-30) claims, examples | 1-21 |
| A | US 2018/0126785 A1 (COMPAGNIE GENERALE DES ETABLISSEMENTS MICHELIN) 10 May 2018 (2018-05-10) claims, examples | 1-21 |

Form PCT/ISA/210 (second sheet) (January 2015)

**INTERNATIONAL SEARCH REPORT**
**Information on patent family members**

International application No.
**PCT/JP2021/027579**

| Patent document cited in search report | Publication date (day/month/year) | Patent family member(s) | Publication date (day/month/year) |
|---|---|---|---|
| JP 2017-52330 A | 16 March 2017 | US 2018/0272800 A1<br>claims, examples<br>WO 2017/043008 A1<br>EP 3348423 A1<br>CN 108025593 A | |
| JP 2017-52329 A | 16 March 2017 | US 2018/0244104 A1<br>claims, examples<br>WO 2017/043007 A1<br>EP 3348422 A1<br>CN 108025594 A | |
| JP 2017-206194 A | 24 November 2017 | (Family: none) | |
| JP 2016-94552 A | 26 May 2016 | (Family: none) | |
| JP 2016-74408 A | 12 May 2016 | (Family: none) | |
| JP 2017-52361 A | 16 March 2017 | US 2018/0215207 A1<br>claims, examples<br>WO 2017/043003 A1<br>EP 3348428 A1<br>CN 108025600 A | |
| CN 109627509 A | 16 April 2019 | (Family: none) | |
| US 2008/0264543 A1 | 30 October 2008 | WO 2006/066602 A1<br>claims, examples<br>EP 1827875 A1 | |
| US 2018/0126785 A1 | 10 May 2018 | WO 2016/184756 A1<br>claims, examples<br>EP 3297851 A1 | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2018178034 A
- JP 2019089911 A
- WO 2018186367 A
- JP 2019206643 A
- JP 2010111753 A
- US 4414370 B
- JP 59006207 A
- JP 5058805 A
- JP 1313522 A
- US 5010166 B


### Non-patent literature cited in the description


- *Toa Synthetic Research Annual Report TREND2000,* (3), 42-45